# EUROPÄISCHE PATENTSCHRIFT

(11) **EP 4 496 948 B1**
(45) Veröffentlichungstag und Bekanntmachung des Hinweises auf die Patenterteilung: **09.09.2026**
(21) Anmeldenummer: 23715058.6
(22) Anmeldetag: 22.03.2023
(51) Int. Cl.: F16C 11/06, F16C 11/10

(54) **BEGRENZUNGSVORRICHTUNG UND VERFAHREN ZUR BEGRENZUNG DER BEWEGLICHKEIT EINES DREHGELENKES**
LIMITATION ARRANGEMENT AND METHOD TO LIMIT THE MOVEMENT OF A ROTARY JOINT
ARRANGEMENT ET METHODE POUR LIMITER LE MOUVEMENT D'UN JOINT PIVOT

(30) Priorität: 23.03.2022 DE 102022106843
(43) Veröffentlichungstag der Anmeldung: 29.01.2025
(73) Patentinhaber: Karl Storz SE & Co. KG, 78532 Tuttlingen (DE)
(72) Erfinder: GRÜNER, Sven, 78532 Tuttlingen (DE)
(86) Internationale Anmeldenummer: PCT/EP2023/057389
(87) Internationale Veröffentlichungsnummer: WO 2023/180408

(56) Entgegenhaltungen:
- FR-A1- 2 570 774
- US-A1- 2016 089 003

## Beschreibung

### Technologischer Hintergrund

Die Erfindung betrifft eine Vorrichtung zur Begrenzung der Beweglichkeit eines Drehgelenkes, insbesondere eines Kugelgelenkes, und ein System umfassend wenigstens eine Haltevorrichtung mit einem Drehgelenk mit Begrenzungsvorrichtung und eine Versorgungsleitung entlang der Gelenkteile des Drehgelenkes. Ferner betrifft die Erfindung ein Verfahren zur Begrenzung der Beweglichkeit eines Drehgelenkes.

Drehgelenke, insbesondere Kugelgelenke, werden in einer Vielzahl von Anwendungsfällen eingesetzt. Derartige Drehgelenke werden unter anderem häufig bei Haltevorrichtungen bzw. Haltearmen in der Medizintechnik eingesetzt, die bei der Durchführung von minimalinvasiven chirurgischen Eingriffen zur Instrumentenführung aufgrund der wenig begrenzten Freiheitsgrade von großem Nutzen sind. Durch eine gelenkige Ausgestaltung beispielsweise an dem distalen Ende einer Haltevorrichtung kann ein Operateur, Assistent oder andere Bedienpersonen ein Instrument wie einen Manipulator, ein optisches Hilfsmittel wie ein Endoskop, eine Klemme oder dergleichen halten und exakt positionieren. Dabei ist es bekannt, dass die eingestellte Position der Haltevorrichtung durch Arretieren des Gelenkes fixiert werden kann. Ferner können in der Medizintechnik manuell steuerbare, halbautomatisierte oder vollautomatisierte Haltevorrichtungen bei der Telemedizin (Telechirurgie) oder chirurgischen Behandlungen, unterstützend eingesetzt werden.

Die Haltevorrichtungen lassen sich sowohl mit Endoskopen als auch mit Mikroskopen oder Kolposkopen kombinieren. Ferner kann eine Haltevorrichtung in Verbindung mit Kamerasystemen und / oder Manipulatoren auch außerhalb von der Medizintechnik zur Untersuchung von schwer zugänglichen technischen Hohlräumen genutzt werden. An eine Haltevorrichtung können Instrumente oder Manipulatoren mit motorischer und gegebenenfalls sogar robotischer Steuerung angeschlossen werden, um Bewegungen und Funktionen des distal angeschlossenen Instruments steuern zu können.

Für den Betrieb von gelenkigen Haltevorrichtungen für medizinische Instrumente, Reinigungsvorrichtungen oder dergleichen ist es in der Regel notwendig entlang der Gelenkteile der Haltevorrichtung wenigstens eine Versorgungsleitung zu führen. Mit Hilfe von einer oder mehreren Versorgungsleitungen können Instrumente oder Werkzeuge, die von der Haltevorrichtung getragen, bewegt und / oder gesteuert werden, mit Energie, Licht und / oder Fluiden wie Gas oder Wasser versorgt werden. Fluide können beispielsweise sterile isotonische Salzlösungen sein, die zur Reinigung eines Endoskopfensters und / oder von Beleuchtungsvorrichtungen oder als Hydraulikfluid verwendet werden können. Dabei kann eine "Versorgungsleitung" im Sinne der Erfindung auch zum Absaugen von Fluiden verwendet werden. Versorgungsleitungen können auch dazu verwendet werden, Instrumente, die distal an der Haltevorrichtung angeordnet sind, elektrisch, pneumatisch oder hydraulisch zu bewegen und zu steuern. Unter dem Begriff Versorgungsleitung werden im Folgenden Leitungen verstanden, die in beiden Richtungen (in distaler und proximaler Richtung) Energie, Fluide, Steuersignale oder Daten übertragen bzw. fördern können.

Werden eine oder mehrere Versorgungsleitungen über ein Drehgelenk hinweg geführt, besteht jedoch das Problem, dass eine unbegrenzte Rotation des Drehgelenkes, insbesondere eines Kugelgelenkes, um die abgehende Achse der Kugel nachteilig ist. Insbesondere kann aufgrund der endlosen Drehbarkeit eines Drehgelenkes eine oder mehrere Versorgungsleitungen um wenigstens ein Gelenkteil gewickelt werden und gegebenenfalls bei zu hohen Belastungen beschädigt werden. Zugbelastungen und / oder Torsionsbelastungen durch Verdrillung drohen die Leitungen zu beschädigen bzw. den Leitungsquerschnitt zu verjüngen, wobei die Gefahr besteht, dass eine Beschädigung nicht optisch festgestellt werden kann, wenn die Verletzung im Inneren der Leitung vorliegt.

Dabei ist insbesondere bei Versorgungsleitungen in Form von elektrischen Kabeln und Druckleitungen zu beachten, dass diese nur bedingt und kontrolliert mechanisch beansprucht werden dürfen, da diese Leitungsarten strengen Vorschriften und Sicherheitsregeln unterliegen. Auch sollten Leckagen durch zu hohe Beanspruchungen bei Versorgungsleitungen, die Flüssigkeiten enthalten vermieden werden, da beispielsweise hydraulisch betriebenen Endeffektoren bei einer Undichtigkeit durch Überbeanspruchung nicht oder nicht mehr zuverlässig gesteuert werden können.

Der Erfindung liegt die Aufgabe zugrunde, eine Vorrichtung zur Begrenzung eines Drehgelenkes zu schaffen, sodass das Drehgelenk ausschließlich in einem begrenzten Drehwinkelbereich bewegbar ist. Dabei soll die Vorrichtung nicht komplett die Drehung des Gelenkes unterbinden, da eine gewisse Drehung z. B. um die Rotationsachse des Drehgelenkes für eine möglichst einfache, komfortable und ergonomische Handhabung des Positionierungsgerätes erforderlich ist.

Für ein System mit gelenkiger Haltevorrichtung und eine über das Gelenk verlaufende Versorgungsleitung ist es ferner die Aufgabe der Erfindung, ein Drehgelenk mit begrenzten Drehwinkelbereich bereitzustellen, um hohe Belastungen der Versorgungsleitung durch Zug, Druck, Verdrillung, Torsion oder Verwindung zu vermeiden. Gleichzeitig soll trotz einer Begrenzung der Drehbarkeit eine ausreichende Stabilität des Drehgelenkes im normalen Betrieb sowie bei Arretierung des Drehgelenkes gewährleistet sein.

Die Offenlegungsschrift FR 2 570 774 A1 offenbart ein Kugelgelenk mit einem begrenzten Drehwinkelbereich. Realisiert wird die Drehwinkelbegrenzung durch einen Wälzkörper, der in Ausnehmungen in der Gelenkkugel und in der Gelenkkugelaufnahme aufgenommen ist.

### Beschreibung der Erfindung

Auf Grundlage der Erfindung sollen die oben genannten Aufgaben besser als mit herkömmlichen mechanischen Drehgelenken wie z. B. Kugelgelenken gelöst werden. Diese Aufgaben werden mit einer erfindungsgemäßen Vorrichtung, System und einem Verfahren zur Begrenzung der Beweglichkeit eines Drehgelenkes gemäß den Merkmalen der unabhängigen An sprüche gelöst. Bevorzugte Ausgestaltungen der Erfindung ergeben sich aus den sich an den unabhängigen Ansprüchen anschließenden Unteransprüchen.

Gemäß einem ersten Aspekt der Erfindung wird eine Vorrichtung zur Begrenzung der Beweglichkeit eines Drehgelenkes vorzugweise für eine Haltevorrichtung für human- oder veterinärmedizinische Anwendungen bereitgestellt, wobei die Vorrichtung zwei relativ zueinander um drei Achsen verdrehbare und verschwenkbare Gelenkteile umfasst. Ferner umfasst die Vorrichtung wenigstens einen ersten Wälzkörper zur Begrenzung der relativen Beweglichkeit der Gelenkteile; wobei beide Gelenkteile jeweils wenigstens eine erste Ausnehmung zur Führung des wenigstens einen ersten Wälzkörpers zwischen den Gelenkteilen und den jeweiligen Anschlägen der Ausnehmungen aufweist, um die Gelenkteile in einem durch die Anschläge begrenzten Winkelbereich zueinander zu bewegen.

Die Begrenzung des Winkelbereiches kann vorteilhaft genutzt werden, wenn wenigstens eine Versorgungsleitung einerseits an dem ersten Gelenkteil und andererseits an dem zweiten Gelenkteil mittels Fixiervorrichtungen fixiert ist. Geeignete Fixiervorrichtungen sind z. B. ein Haltebügel, Halteöse, Halteband oder Kabelschuh. Bei der Verwendung des Drehgelenkes für eine Haltevorrichtung schließen sich weitere Haltesegmente an die Gelenkteile an, wobei Fixiervorrichtungen bevorzugt an den distalen Enden der Gelenkteile vorgesehen werden können. Ferner können Fixiervorrichtungen alternativ oder zusätzlich zu Fixpunkten an den jeweiligen Gelenkteilen an den jeweiligen Nachbarhaltesegmenten bereitgestellt werden. Die Fixierung kann so ausgestaltet sein, dass eine Bewegung der Versorgungsleitung parallel zu den jeweiligen Längsachsen der Gelenkteile noch möglich ist. Dabei weist eine Versorgungsleitung, die in Längsrichtung des Haltesegmentes fixiert, ist eine freie Länge von z. B. wenigstens 5 mm auf, damit durch das Spiel der Versorgungsleitung eine relative Bewegung der Gelenkteile gewährleistet ist.

Es ist zu bemerken, dass das Drehgelenk für Haltevorrichtungen neben human- und veterinärmedizinischen Anwendungen auch in anderen Anwendungsgebieten genutzt werden kann. Dabei ist es wesentlich, dass das mit dem Drehgelenk zu positionierende Gerät in möglichst vielen Richtungen bzw. Winkelstellungen schwenkbar sein soll, wobei ein übermäßiges Verdrehen der Gelenkteile zueinander vermieden werden soll. Dies kann z. B. bei der Positionierung von technischen Geräten wie z. B. Beleuchtungsvorrichtungen oder Kamerasystemen genutzt werden, um bestimmte Flächen oder schwer zugängliche technische Hohlräume gezielt anzustrahlen bzw. untersuchen zu können.

Zur einfachen Verschwenkbarkeit zueinander umfasst das erste Gelenkteil vorzugsweise eine konvex geformte Oberfläche und das zweite Gelenkteil umfasst eine konkav geformte Oberfläche als Lagerfläche, so dass die beiden einander zugewandten Oberflächen aneinander angepasst sind und mit Ausnahme der Flächen der Ausnehmungen ineinander in Eingriff gebracht werden können. Die Ausnehmungen und die Wälzkörper sind so konfiguriert, dass der eine oder mehrere Wälzkörper ein oder mehrere schwimmende Elemente zwischen den beiden Gelenkteilen bilden, die gleichermaßen mit den entsprechenden Innenwandungen bzw. Innenflächen der Ausnehmungen in beiden Gelenkteilen im Eingriff stehen. Dabei interagiert der Wälzkörper mit beiden Gelenkteilen um als Rotationskontrollelement zu fungieren.

Die Ausnehmungen sind so ausgebildet, dass sie nur eine geringe Fläche der jeweiligen Gelenkteile einnehmen, so dass wenigstens 80 % der übrigen Fläche zur Verfügung steht, um im Eingriff mit der Kontaktfläche des jeweiligen anderen Gelenkteiles stehen zu können. Bei einer Ausführung des Gelenkes als Kugelgelenk bleibt somit um die Ausnehmungen herum genügend Fläche im Eingriff, um die Funktion des Kugelgelenkes zu erhalten. Um das Kugelgelenk fest arretieren zu können, kann das erste Gelenkteil mit Hilfe einer Verschiebung eines Schubelementes und durch Reibschluss an seiner Außenfläche arretiert werden. Bei einer Arretierung des Kugelgelenkes ist eine möglichst große Kontaktfläche mit dem distalen Ende des Schubelements von Vorteil.

Beide Gelenkteile weisen eine Ausnehmung oder Tasche auf, wobei die vorzugsweise konkave ausgebildete Lagerfläche oder Lagerschale eine zentrale Ausnehmung aufweist. Ein vorzugsweise wenigstens teilweise konvex gekrümmtes erstes Gelenkteil wird formschlüssig von der Lagerschale umfasst, wobei auf Höhe der zentralen Ausnehmung kein direkter Kontakt zwischen dem ersten und zweiten Gelenkteil besteht. Auf der Höhe der Ausnehmungen der jeweiligen Gelenkteile kann der Kontakt zwischen den Gelenkteilen nur indirekt, d. h. ausschließlich mittels des Wälzkörpers hergestellt werden.

Das wenigstens teilweise konvex ausgebildete erste Gelenkteil weist vorzugsweise wenigstens eine langgestreckte längliche Ausnehmung auf. Weiterhin weist die Ausnehmung quer zu ihrer Längsachse eine Querschnittskrümmung auf, die an den Außendurchmesser des Wälzkörpers zur optimalen Aufnahme des Wälzkörpers angepasst ist. Auf diese Weise kann die mögliche Kontaktfläche des Wälzkörpers mit dem ersten Gelenkteil und Spiel des Wälzkörpers quer zur Längsachse der Ausnehmung minimiert werden. Somit kann von dem Vorteil einer relativ großen Kontaktfläche zwischen dem ersten Gelenkteil als Lagerelement und dem zweiten Gelenkteil als Lagerschale profitiert werden.

Erfindungsgemäß addieren sich die Winkelbereiche der korrespondierenden Ausnehmungen.

In anderen Worten, der Walzkörper kann sich längs der längsgestreckten Ausnehmung des ersten Gelenkteiles bewegen und zudem in der vorzugsweise kreisförmigen Ausnehmung des zweiten Gelenkteiles, sodass maximal der Weg entlang der maximalen Längsausdehnung des ersten Gelenkteiles und entlang eines Durchmessers der Innenlauffläche der Ausnehmung des zweiten Gelenkteiles zurückgelegt werden kann. Auf diese Weise kann eine weggesteuerte Drehbarkeit der beiden Gelenkteile zueinander erfolgen.

In einer bevorzugten Ausführungsform liegt die erlaubte vorbestimmte insgesamt mögliche Winkelrotation zwischen 120 ° und 340 °, um eine Überdrehung über 360 ° auszuschließen. In einer noch bevorzugteren Ausführungsform kann die Vorrichtung nur Bewegungen der Gelenkteile zueinander in einen kleineren Winkelbereich von zwischen 140 ° und 270 ° ermöglichen.

Da sich die Winkelbereiche beider Ausnehmungen addieren, können die Ausnehmungen auf dem ersten Gelenkteil relativ schmal ausgeführt werden und damit eine stabile Klemmung ermöglichen. Auf diese Weise können zu große Ausnehmungen auf nur einem Gelenkteil und eine damit einhergehende Beeinträchtigung der Stabilität bei der Drehbarkeit bzw. nach Arretierung nach einer Klemmung vermieden werden.

Gemäß einer bevorzugten Ausführungsform umfasst die Vorrichtung wenigstens einen zweiten Wälzkörper, wobei beide Gelenkteile jeweils eine zweite Ausnehmung zur Führung des korrespondierenden zweiten Wälzkörpers aufweist.

Vorzugsweise sind die erste Ausnehmung und die zweite Ausnehmung an dem jeweiligen Gelenkteil gegenüberliegend angeordnet.

Wird für das erste Gelenkteil ein kugelförmiges Kopfteil mit Gelenkhals bereitgestellt, sind die Ausnehmungen des ersten Gelenkteiles spiegelsymmetrisch zu der Gelenkhalslängsachse angeordnet. Durch diese symmetrische Anordnung von zwei Ausnehmungen im ersten sowie zweiten Gelenkteil, kann jeweils beidseitig ein Wälzkörper zwischen den Gelenkteilen angeordnet werden. Durch diese Anordnung werden mögliche unerwünschte Kippbewegungen, die bei einer nur einseitig angeordneten Ausnehmung in den jeweiligen Gelenkteilen möglich wären, unterbunden. Ferner wird durch diese symmetrische Anordnung ein möglicher ungleichmäßiger Verschleiß der Lagerschale bzw. des zweiten Gelenkteiles vermieden und es können eventuelle Fertigungstoleranzen besser ausgeglichen werden.

Um die Vorrichtung auch in unterschiedlichen Winkelstellungen fest arretieren zu können ist gemäß einer bevorzugten Weiterbildung das erste Gelenkteil durch Reibschluss an seiner Außenfläche arretierbar. Hierzu wird vorzugsweise mittels eines Verbindungselements ein Haltesegment an das zweite Gelenkteil angeschlossen, wobei das Haltesegment ein Schubelement aufweist. Das Schubelement kann als axial bewegbare Schubstange ausgebildet sein und erstreckt sich in das Verbindungselement und durch eine Aussparung des zweiten Gelenkteiles hindurch, um bei einer längsaxialen Verschiebung in distale Richtung, d. h. in Richtung des ersten Gelenkteils zur Klemmung bzw. zur Arretierung zu fungieren.

Gemäß einer bevorzugten Ausführungsform ist das erste Gelenkteil als kugelsegmentförmiges Kopfteil und die wenigstens eine erste Ausnehmung als längsförmige Außenrille mit zwei Anschlägen entlang des Kugeläquators ausgebildet und umfasst einen Winkel von weniger als 70 °, wobei die verbleibende hervorstehende Außenfläche des ersten Gelenkteiles für den Eingriff mit der Innenfläche des zweiten Gelenkteiles verfügbar ist. Wenn der maximale Laufweg L1 des ersten Gelenkteiles einem Winkelbereich von 70 ° entspricht kann dieser zusammen mit einem gleich groß dimensionierten Laufweg der kreisflächigen Ausnehmung des zweiten Gelenkteiles insgesamt eine vorbestimmte Winkelrotation von 140 °des Drehgelenkes erlauben. Andere Winkelbereiche bis zu etwa 270 ° sind je nach Bedarf der Rotationslimitierung denkbar.

In einer bevorzugten Ausführungsform kann das erste Gelenkteil ein kugelsegmentförmiges Kopfteil aufweisen und damit eine Teilkugelfläche aufweisen. Dabei kann die Teilkugelfläche in dem zweiten Gelenkteil, das beispielsweise wenigstens als halbsphärische Lagerschale ausgebildet sein kann, drehbar gelagert sein. Die Teilkugelfläche oder Kugelsegmentaußenfläche wird vorzugsweise formschlüssig von der Lagerschale umfasst. Die Teilkugelfläche bzw. das kugelsegmentförmige Kopfteil des ersten Gelenkteils weist wenigstens eine langgestreckte längliche Ausnehmung an seiner Außenfläche auf, die längs bezüglich einer Tangente verläuft. Vorzugsweise kann die Ausnehmung längs der Horizontallinie (Äquatorlinie) verlaufen, die quer zu einer von dem Kopfteil abgehenden Achse eines Gelenkhalses angeordnet ist. Durch die Bereitstellung einer dem Wälzkörperquerschnitt angepassten schmalen Außenrille verbleibt viel Eingriffsfläche, die auch zur Reibschlussklemmung verwendet werden kann.

Beide Gelenkteile weisen eine Ausnehmung oder Tasche auf. Gemäß einer bevorzugten Ausführungsform ist die wenigstens eine korrespondierende Ausnehmung des zweiten Gelenkteiles als kreisförmige Innenlauffläche mit einem umlaufenden Anschlagsrand ausgebildet.

In anderen Worten, die konkave, vorzugsweise wenigstens halbsphärische Lagerfläche oder Lagerschale weist eine Ausnehmung in Kreisform auf, entlang deren Innenlauffläche der Wälzkörper sich bewegen kann. Dabei kann ein Wälzkörper maximal die Länge L2 entlang dem gekrümmten Laufweg parallel zum Innendurchmesser der Kreisfläche in eine Richtung zurücklegen. Der Außendurchmesser der Kreisfläche ist wenigstens um den Radius eines kugelförmigen Wälzkörpers größer, um einen dem Wälzkörper angepassten gekrümmten Anschlagsrand zur Verfügung zu stellen. Die ein oder mehreren Wälzkörper können gleichermaßen mit der genannten rillenförmigen des ersten Gelenkteiles und der kreisförmigen Ausnehmung des zweiten Gelenkteiles interagieren bzw. im Eingriff stehen und so die erreichbaren Winkelfreiheiten der Ausnehmungen zu einer vorbestimmten maximalen Gesamtwinkelrotation addieren.

Gemäß einer bevorzugten Ausführungsform sind die korrespondierenden Ausnehmungen in Summe tiefer als der Außendurchmesser des korrespondierenden kugelförmigen Wälzkörpers.

Dadurch, dass die Ausnehmungen oder Taschen in Summe etwas tiefer sind als die verwendeten Wälzkörper, können die Wälzkörper sich nicht verklemmen und stören nicht die Gängigkeit des Gelenkes. Die Wälzkörper, die als Anschlagkugeln dienen, können bevorzugt einen Durchmesser von 2 mm bzw. einen Radius von 1 mm aufweisen, wobei der Durchmesser des halbkreisförmigen Querschnittes der Außenrille und der entsprechende Radius des ersten Gelenkteiles größer als 2 mm bzw. 1 mm ausgeführt ist. Ferner ist auch die Ausnehmung im zweiten Gelenkteil tiefer als der halbe Durchmesser des Wälzkörpers. Andere Abmessungen als 2 mm Durchmesser der Wälzkörper sind auch denkbar und abhängig von der Dimensionierung des Gelenkes.

Gemäß einer bevorzugten Ausführungsform ist das erste Gelenkteil ein kugelsegmentförmiges Kopfteil mit Gelenkhals und das zweite Gelenkteil eine Gelenkschale, die den Kugeläquator in einer nicht abgewinkelten Stellung des Gelenkes übergreift und zur Aufnahme des Kopfteiles zweiteilig ausgebildet ist.

Auf diese Weise kann ein Kugelgelenk zur Verfügung, bevorzugt für eine Haltevorrichtung, gestellt werden. An den Gelenkhals bzw. an die Gelenkschale können weitere Haltesegmente einer Haltevorrichtung angeschlossen werden.

Gemäß einer bevorzugten Ausführungsform weist die Gelenkschale an ihrem Außenrand wenigstens eine Aussparung zur Aufnahme des Gelenkhalses des ersten Gelenkteiles auf, um die Achse des Gelenkhalses bis zu 90 ° abwinkeln zu können.

Auf diese Weise kann bei dem erfindungsgemäßen Kugelgelenk eine Drehung um die Gelenkhalsachse des ersten Gelenkteiles eingeschränkt werden, ohne dass die bisherige Abwinkelbarkeit von +/- 90 ° im Vergleich zu einem nicht in der Bewegungsfreiheit eingeschränkten Kugelgelenk verringert wird.

Gemäß einer bevorzugten Ausführungsform ist wenigstens eine zweite Ausnehmung der Gelenkschale kreisförmig ausgebildet und deren Mittelpunkt verläuft auf einer gemeinsamen Achse m mit dem Mittelpunkt der ersten Ausnehmung um eine symmetrische und damit stabile Anordnung bereitzustellen.

Gemäß einer bevorzugten Ausführungsform ist das zweite Gelenkteil über ein Verbindungselement mit einem Haltesegment verbindbar, in dem ein axial verschiebbares Schubelement angeordnet ist. Das zweite Gelenkteil weist eine zentrale Aussparung auf, um das distale Ende des Schubelementes hindurchzuführen und auf diese Weise das erste Gelenkteil wahlweise mittels einer distalen Verschiebung des Schubelementes zu arretieren oder mittels einer Verschiebung in proximaler Richtung d. h. weg von der Außenfläche des ersten Gelenkteiles zu lösen.

Ferner wird ein System bereitgestellt, das als bevorzugte Ausführungsform eine Haltevorrichtung mit wenigstens einem distalen Haltesegment oder Handgriff für eine medizinische Vorrichtung und ein proximales Haltesegment umfasst, die jeweils mit einem Drehgelenk koppelbar sind, wobei das Drehgelenk eine Vorrichtung zur Begrenzung seiner Beweglichkeit nach einem der vorhergehenden Ansprüche aufweist. Ferner umfasst das System eine Versorgungsleitung für die medizinische Vorrichtung, die von dem ersten Gelenkteil zum zweiten Gelenkteil geführt wird, wobei eine Begrenzung der Beweglichkeit des ersten Gelenkteiles gegenüber dem zweiten Gelenkteil eine Beschädigung der Versorgungsleitung durch Umwickeln und / oder Zuglasten verhindert.

Gemäß einer bevorzugten Ausführungsform ist das Drehgelenk ein Kugelgelenk und die Gelenkschale mit dem proximalen Haltesegment verbunden. Das proximale Haltesegment weist ein axial verschiebbares Schubelement auf, um das Kopfteil des ersten Gelenkteiles des Drehgelenkes reibschlüssig zu arretieren.

Gemäß einem weiteren Aspekt der Erfindung wird ein Verfahren zur Begrenzung der Beweglichkeit eines Drehgelenkes bereitgestellt, umfassend die folgenden Verfahrensschritte:
Bereitstellen eines zweiteiligen Drehgelenkes mit wenigstens einer Ausnehmung in jedem Gelenkteil für wenigstens einen Wälzkörper;
Führung des wenigstens einen Wälzkörpers zwischen den Gelenkteilen in den korrespondierenden Ausnehmungen der beiden Gelenkteile; und
begrenztes Bewegen der Gelenkteile zueinander aufgrund der Bewegbarkeit des wenigstens einen Wälzkörpers innerhalb der korrespondierenden Ausnehmungen bis zum Erreichen von Anschlagstellungen.

Gemäß einer bevorzugten Ausführungsform umfasst das Verfahren ferner die folgenden Verfahrensschritte:
Verbinden des zweiten Gelenkteiles über ein Verbindungselement mit einem Haltesegment, in dem ein axial verschiebbares Schubelement angeordnet ist;
wahlweise Arretieren oder Lösen des ersten Gelenkteiles, wobei zur Arretierung mittels Reibschluss eine axiale Verschiebung des Schubelementes in dem Haltesegment durch eine zentrale Aussparung hindurch in Richtung der Außenfläche des ersten Gelenkteiles erfolgt und wobei zum Lösen eine axiale Verschiebung des Schubelementes von der Außenfläche des ersten Gelenkteiles weg erfolgt.

In der arretierten Stellung des Gelenkes ist eine Außenfläche des ersten Gelenkteiles, über das Schubelement mit einer Kontaktfläche des zweiten Gelenkteiles mittels Klemmspannung reibschlüssig festlegbar. In der gelösten Stellung des Gelenkteiles fungiert die Außenfläche des ersten Gelenkteiles als Lauffläche, die mit der korrespondierenden Kontaktfläche des zweiten Gelenkteiles, das vorzugsweise als Gelenkschale oder eine Kugelsegmentpfanne ausgebildet ist, in Eingriff steht. Die genannten Stellungen können einfach durch eine Verschiebung des Schubelementes zur Außenfläche des ersten Gelenkteiles bzw. von dieser weg eingestellt werden.

Gemäß einer bevorzugten Ausführungsform umfasst das Verfahren ferner die folgenden Verfahrensschritte:
Fixieren einer Versorgungsleitung an dem ersten Gelenkteil und an dem zweiten Gelenkteil und / oder an wenigstens einem weiteren Haltesegment mittels Fixiervorrichtungen.

Dabei verhindert eine Begrenzung der Beweglichkeit des ersten Gelenkteiles gegenüber dem zweiten Gelenkteil eine Beschädigung der Versorgungsleitung durch Umwickeln und / oder Zuglasten.

Gemäß einer bevorzugten Ausführungsform erfolgen vor der Bereitstellung des zweiteiligen Drehgelenkes, das als Kugelgelenk ausgebildet ist und ein kugelsegmentförmiges Kopfteil als erstes Gelenkteil und eine zur Montage teilbare Gelenkschale als zweites Gelenkteil (220) umfasst, folgende Verfahrensschritte erfolgen:
Einführen des ersten Gelenkteiles mit dem wenigstens einem Wälzkörper in ein Unterteil der Gelenkschale, wobei der Gelenkhals des kugelsegmentförmigen Gelenkteiles aus der Gelenkschale geführt wird; und
Umschließen des kugelsegmentförmigen Gelenkteiles mit einem Oberteil der Gelenkschale. Auf diese Weise kann ein kugelsegmentförmiges erstes Gelenkteil in das Unterteil eingeführt werden und anschließend von dem Oberteil der Gelenkschale verschlossen werden. Die Begriffe "Ober" und "Unter" sind dabei nicht beschränkend zu verstehen, sodass auch eine umgekehrte Reihenfolge bei der praktischen Montage erfolgen kann. Dabei ist zu beachten, dass bei einer Ausführungsform mit zwei kreisförmigen Ausnehmungen des zweiten Gelenkteiles die Trennebene zwischen Ober- und Unterteil mitten durch die Kreisfläche der beiden Ausnehmung verläuft.

Erfindungsgemäß umfasst das Verfahren ferner die folgenden Verfahrensschritte:
Bereitstellen einer oder zwei Aussparungen im Außenrand der Gelenkschale zur Aufnahme des Gelenkhals, und
Abwinkeln der Achse des Gelenkhalses des ersten Gelenkteiles bis zu 90 °.

Durch die Abwinkelbarkeit ist eine größere Beweglichkeit gegeben und bessere Handhabung des Gelenkes für eine Bedienperson gewährleistet. Dabei sind zwei Aussparungen so positioniert, dass sie symmetrisch zueinander und gegenüberliegend in der Gelenkschale angeordnet sind. Wenn zudem zwei Ausnehmungen in der Lagerschale angeordnet sind, sind die jeweiligen Mittelpunkte der zwei kreisförmigen Taschen ebenfalls gegenüberliegend in der Gelenkschale angeordnet, so dass die Mittelpunkte auf einer Achse m liegen, wobei die Mittelpunktachse m quer zur abgehenden Längsachse b des zweiten Gelenkteiles verläuft und zudem Teil der Symmetrieebene der symmetrisch angeordneten Aussparungen ist. Aufgrund der symmetrischen Anordnung der Aussparungen und Ausnehmungen zueinander verbleiben beidseitig der Aussparungen gleichmäßig über die Gelenkschale verteilte Laufflächen bzw. Eingriffsflächen für die Außenfläche des ersten Gelenkteiles. Damit kann die Stabilität des Gelenkes bei Bewegung der Gelenkteile zueinander gewährleistet werden. Für eine Arretierung verbleibt ebenfalls ausreichend Fläche, um einen zuverlässigen und stabilen Reibschluss zwischen dem ersten Gelenkteil und dem zweiten Gelenkteil herzustellen.

### Kurze Figurenbeschreibung

Die Erfindung sowie weitere vorteilhafte Ausführungsformen und Weiterbildungen derselben werden im Folgenden anhand der in den Zeichnungen dargestellten Beispiele näher beschrieben und erläutert. Die Zeichnungen dienen zur Illustration und sind nicht maßstabsgetreu. Begriffe wie 'oben' oder 'unten', Ober- oder Unterteil, Richtungen oder Orientierungen von Achsen, die in den Figuren gezeigt werden, sind nicht beschränkend zu verstehen, da das Gelenk bzw. Teile davon nicht auf die gezeigte Position im Raum festgelegt ist. Gleiche Referenzzeichen zeigen dieselben Elemente in den Figuren. Die in der folgenden Beschreibung und den Zeichnungen zu entnehmende Merkmale können einzeln für sich oder zu mehreren in beliebiger Kombination erfindungsgemäß angewandt werden, ohne den Rahmen der vorliegenden Offenbarung zu verlassen. Es zeigen:
**Figur** 1 eine schematische perspektivische Ansicht eines erfindungsgemäßen ersten Gelenkteiles;
**Figur 2a** zeigt schematische perspektivische Detailansicht eines zweiten Gelenkteiles, welche als Lagerschale für ein Kugelgelenk ausgeführt ist;
**Figur 2b****,** **Figur 2c** und **Figur 2d** zeigen Teilansichten des zweiten Gelenkteiles zur Veranschaulichung des Aufbaus und der Funktionsweise;
**Figur 3a** zeigt eine schematische perspektivische Darstellung einer erfindungsgemäßen Vorrichtung zur Begrenzung der Beweglichkeit umfassend ein erstes Gelenkteil und ein zweites Gelenkteil, das zur Veranschaulichung nur teilweise gezeigt wird;
**Figur 3b** und **Figur3c** zeigen weitere Ansichten der Vorrichtung, wobei das mit einem Haltearm verbundene zweite Gelenkteil zur Veranschaulichung nur teilweise gezeigt wird und das erste Gelenkteil in verschiedenen Anschlagstellungen gezeigt wird;
**Figur 4a** und **Figur 4b** zeigen die Vorrichtung in weiteren Anschlagstellungen, wobei der Haltearm zur Veranschaulichung des innenliegenden Schubelementes geöffnet dargestellt wird;
**Figur 5** zeigt einen Teil einer Haltevorrichtung, wobei der mit dem zweiten Gelenkteil verbundene Haltearm als Kugelschale ausgebildet ist, die ein entsprechendes kugelsegmentförmiges erstes Gelenkteil mit einem Griffteil an der abgehenden Achse aufnimmt;
**Figur 6** zeigt ein Ausführungsbeispiel eines erfindungsgemäßen Verfahrens zur Begrenzung der Beweglichkeit eines zweiteiligen Drehgelenkes; und
**Figur 7** zeigt eine weitere Ausführungsform eines erfindungsgemäßen Verfahrens, wobei das zweite Gelenkteil eines Kugelgelenkes zweiteilig bereitgestellt wird, um das erste Gelenkteil beim Zusammenbau einführen zu können.

### Detaillierte Beschreibung der Figuren

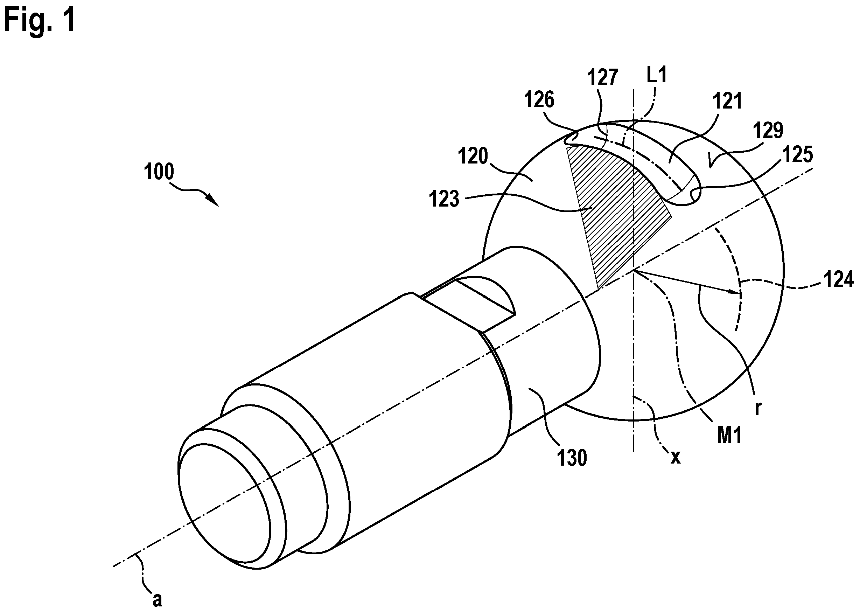

**Figur 1** zeigt schematisch ein erfindungsgemäßes erstes Gelenkteil 120 eines Kugelgelenkes. Das erste Gelenkteil 120 bildet zusammen mit dem Gelenkhals 130 eine Gelenkeinheit 100. Der Gelenkhals hat eine Mittelachse a und das kugelsegmentförmige Kopfteil, das das erste Gelenkteil 120 bildet, hat einen Mittelpunkt M1 im Schnittpunkt der Längsachse a und der senkrechten Mittelachse (gekennzeichnet mit Achse x) durch das kugelsegmentförmige Kopfteil. Das kugelsegmentförmige Kopfteil 120 weist eine Außenfläche 129 auf, die als Lauffläche oder Eingriffsfläche fungiert und in der wenigstens eine Ausnehmung 121 angeordnet ist. Die Ausnehmung 121 ist langgestreckt und verläuft in Richtung des Kugeläquators 124. Dabei verläuft die abgehende Achse a des Gelenkhalses 130 senkrecht bzw. im rechten Winkel zur Äquatorebene und damit senkrecht zu dem gezeigten Kugelradius r, der den Kugeläquator aufspannt.

Die als längsförmige Außenrille ausgebildete Ausnehmung 121 hat an beiden Enden einen Anschlag 125 bzw. 126. Die Ausnehmung 121 bildet eine Laufbahn der Länge L1 für einen kugelförmigen Wälzkörper und hat einen gekrümmten Querschnitt 127, dessen Krümmung an die Außengeometrie des wenigstens einen kugelförmigen Wälzkörpers (hier nicht gezeigt) angepasst ist. Vorzugsweise ist der Radius des Querschnittes 127 etwas tiefer als der Kugelradius des Wälzkörpers bzw. die Krümmung des Querschnitts 127 ist ein wenig größer als der Außendurchmesser des korrespondierenden kugelförmigen Wälzkörpers. Auf diese Weise können die Begrenzungskugeln bzw. Wälzkörper leichtgängig in der rillenförmigen Ausnehmung 121 laufen, ohne dass diese verklemmen. Vorteilhafterweise wird somit die Leichtgängigkeit des Gelenkes sichergestellt. In anderen Worten kann ein Wälzkörper entlang der Länge L1 und den Wänden der Ausnehmung 121 einfach entlanggleiten, bis die jeweiligen Anschläge 125 und 126 erreicht werden. Dabei ist aufgrund der gekrümmten Endanschläge die Lauflänge L1 kürzer als die gesamte Längsausdehnung der Ausnehmung 221 auf Höhe der Außenfläche.

Die maximale Beweglichkeit entlang L1 d. h. der entlang gekrümmten Längsmittellinie am Boden der rinnenförmigen Ausnehmung 121 entspricht in dem gezeigten Fall einem vorgegebenen begrenzten Winkelbereich, der hier mit dem Referenzzeichen 123 angedeutet ist. Es sind auch andere Winkelbereiche als der gezeigte von etwa 60 °-70 ° denkbar. Je nach Wahl des gewählten Winkels 123 können die Begrenzungen der Beweglichkeit des Kugelgelenkes mehr oder weniger erfolgen. Werden zwei Ausnehmungen der Länge L1 gegenüberliegend vorgesehen, kann die Länge L1 einem Winkelbereich von jeweils weniger als 120 °, vorzugsweise weniger als 90 ° und besonders bevorzugt weniger als 70 ° umfassen.

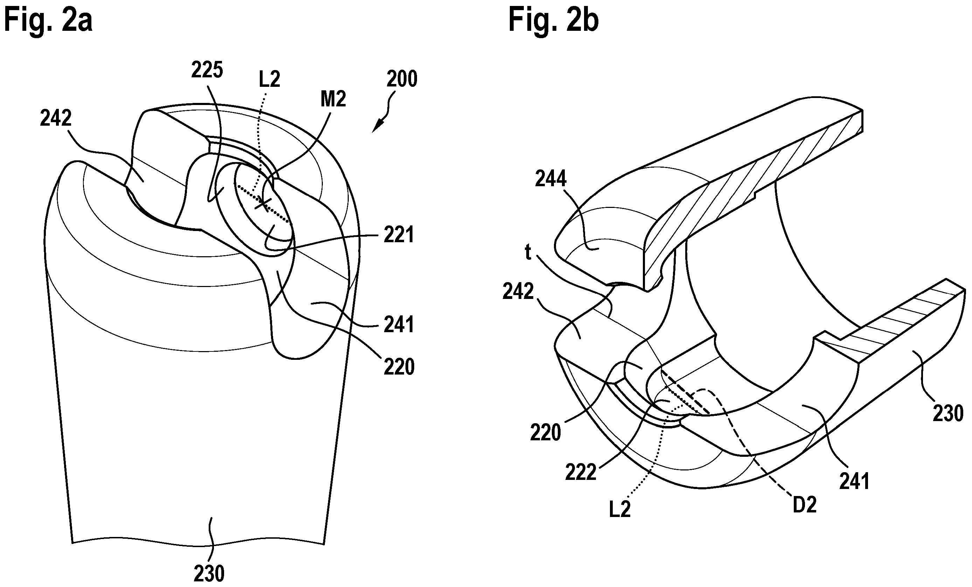

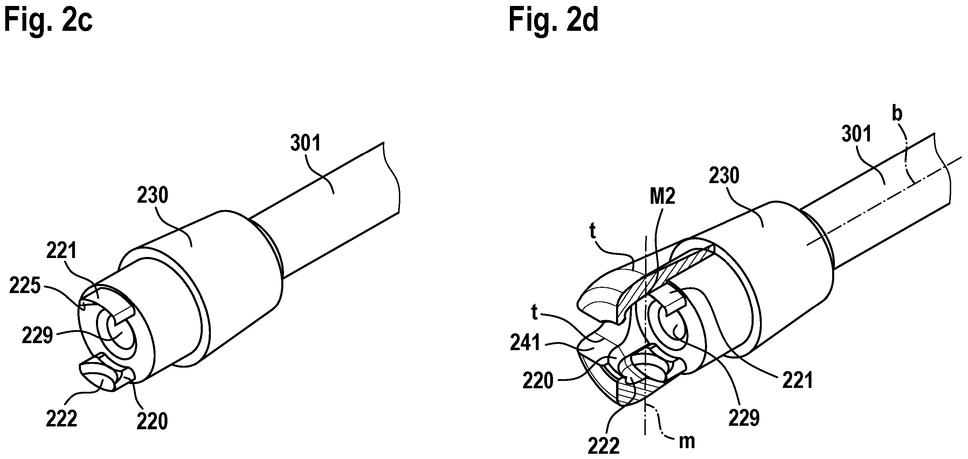

**Figur 2a, Figur 2b** und **Figur 2c** zeigen jeweils das zweite Gelenkteil, wobei **Figur 2b** und **Figur 2c** jeweils eine perspektivische Detailansicht des zweiten Gelenkteiles 220 zeigen, welches zur besseren Veranschaulichung mit Teilquerschnitten gezeigt wird. **Figur 2d** zeigt ein weiteres fragmentarisches, perspektivisches Bild von dem zweiten Gelenkteil. Das zweite Gelenkteil 220 bildet zusammen mit dem Verbindungselement 230 eine Gelenkeinheit 200.

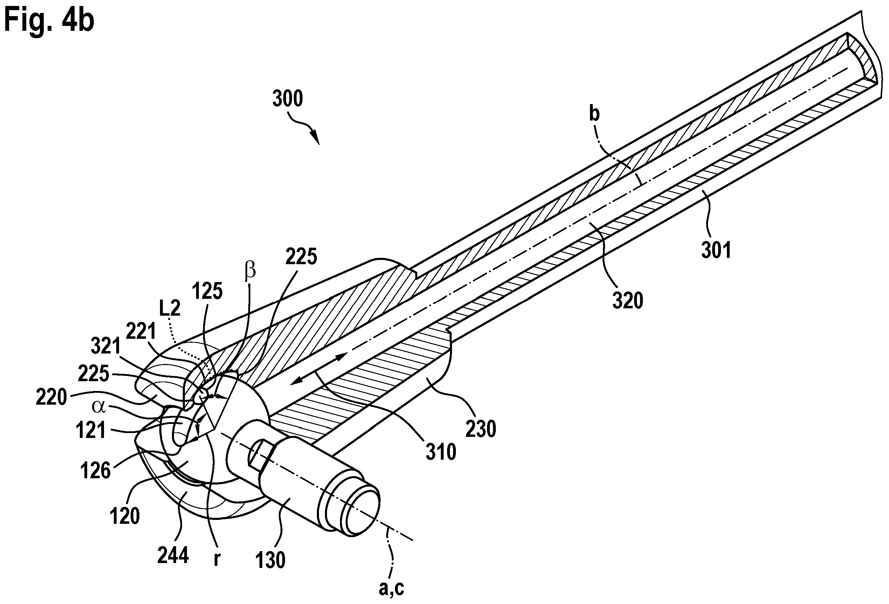

**Figur 2a** zeigt das zweite Gelenkteil 220 mit einer Ausnehmung 221, die mit dem schwimmenden Element bzw. den Wälzkörper (nicht gezeigt) mit der anderen Ausnehmung 121 (nicht gezeigt) des ersten Gelenkteiles 120 (nicht gezeigt) korrespondiert. Wie die Ausnehmung 121 in dem ersten Gelenkteil 120 besitzt auch diese Ausnehmung 221 einen Anschlag 225. Da die Ausnehmungen 221, 222 kreisförmig ausgebildet sind, entsteht jeweils eine kreisförmige Innenlauffläche am Boden für den jeweiligen Wälzkörper 321 mit einem Kreismittelpunkt M2 (siehe x in **Figur 2a**). Jede Ausnehmung hat einen Innenlaufweg L2 (gepunktete Linie, die der Krümmung der Gelenkschale angepasst ist, siehe auch L2 in **Figur 4b****)** und einem umlaufenden Anschlag 225 sowie einen Außenranddurchmesser D2 (gestrichelte Linie), der größer als der Innendurchmesser des Kreises ist. Die Tiefe der Ausnehmung 221 und die Krümmung des Anschlagrandes 225 ist jeweils so gewählt, dass der Wälzkörper optimal in dieser Ausnehmung 221 laufen kann. Vorzugsweise ist die Krümmung des Anschlagsrandes 225 etwas größer als die Außenkrümmung des Wälzkörpers 321, der vorzugsweise kugelförmig ausgebildet ist. Um Verklemmungen zu verhindern und eine Leichtgängigkeit der Wälzkörper 321 zu gewähren ist die Tiefe der Ausnehmungen 221, 222 tiefer als der Radius eines kugelförmiges Wälzkörpers.

Die Länge L2 (gepunktete Linie durch Mittelpunkt M2) ist der mindestens der maximale Querschnitt des Innenkreises und verläuft durch den Mittelpunkt M2. Die Lauflänge L2 ist dabei abhängig von der zugehörigen Krümmung des Laufweges und ist damit länger als der Durchmesser der Innenkreisfläche der kreisförmigen Ausnehmung 221. Die Lauffläche des Wälzkörpers in der Ausnehmung 221 wir zudem von dem gekrümmten Außenrand bzw. Anschlag begrenzt.

Nimmt man einen Laufweg entlang der gepunkteten Länge L2 in der Ausnehmung 221 des zweiten Gelenkteil 220 an, ergibt sich mit der Länge L1 des ersten Gelenkteiles (siehe **Figur 1**) ein maximaler Laufweg L1+L2, den der Wälzkörper in eine Richtung zurücklegen kann. Die Länge L1 und Länge L2 entsprechen jeweils einen vorgegebenen Winkelbereich, wobei sich die Winkelbereiche der korrespondierenden Ausnehmungen 221 und 121 addieren. Dabei können die Längen L1 und L2 etwa gleich lang ausgebildet sein.

In einer beispielhaften Ausführungsform entsprechen die Längen L1 und L2 der jeweiligen Ausnehmungen 121, 221 einem Winkelbereich von jeweils 70 °. In diesem Beispiel ergibt sich eine Rotationsmöglichkeit des ersten Gelenkteiles 120 um seine abgehende Achse von insgesamt etwa 140 °. Die Bereitstellung der symmetrisch angeordneten zweiten Ausnehmung 222, die mit einer Ausnehmung 122 des ersten Gelenkteiles korrespondiert, dient zur Stabilität des Gelenkes und wird genauso dimensioniert wie die erste Ausnehmung 221, um die Bewegung genauso zu begrenzen wie die gegenüberliegende Ausnehmung 221.

Während die gegenüberliegenden Ausnehmungen 221 und 222 des zweiten Gelenkteiles 220 gleich groß ausgebildet sein müssen (jeweils dieselbe Querschnittslänge L2 in **Figur 2a** und **2b**), ist es möglich die Länge L1 der mit diesen Ausnehmungen 221, 221 korrespondierenden Ausnehmungen 121, 122 je nach gewünschter Begrenzung gleich groß wie L2 oder variabel zu gestalten. Letzteres bedeutet, dass die Länge L1 kürzer oder länger als die Länge L2 gewählt werden kann. So kann in einer beispielhaften Ausführungsform der Innenlaufweg L2 der kreisförmigen Ausnehmung 221 geringer als die Länge L1 der rillenförmigen Ausnehmung 121gewählt werden, um mehr hervorstehende Lauffläche zwischen den Aussparungen 241, 242 und der zentralen Aussparung 229 sowie den Ausnehmungen 221 für die Außenfläche des ersten Gelenkteiles 120 (nicht gezeigt) bereitstellen zu können.

Werden zwei Ausnehmungen der Länge L2 gegenüberliegend vorgesehen, sollte die jeweilige Länge bevorzugt einem Winkelbereich von weniger als 90 °, vorzugsweise 70 ° entsprechen. Je geringer die Winkelbereiche und zugehörigen Längen beider Ausnehmungen 221, 121 gewählt werden, desto weniger verdreht sich eine an jedem Gelenkteil befestigte Versorgungsleitung, sodass die Versorgungsleitung mit weniger Spiel zwischen den beiden Gelenkteilen befestigt werden kann.

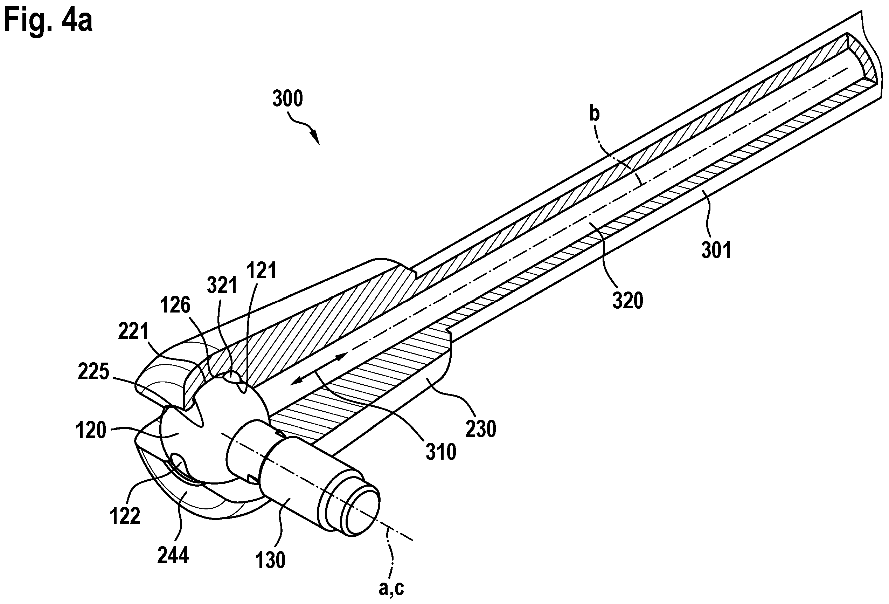

Das zweite Gelenkteil 220 ist als eine Gelenkschale bzw. Kugelsegmentpfanne ausgebildet, wobei der Außenrand 244 der Gelenkschale wenigstens eine Aussparung 241 aufweist. Die gezeigte Ausführungsform zeigt noch eine weitere Aussparung 242 auf der gegenüberliegenden Seite. Die Aussparungen 241 und 242 sind so konfiguriert, dass sie einen Gelenkhals 130 des ersten Gelenkteiles 120 aufnehmen können. Auf diese Weise kann das Kopfteil des ersten Gelenkteiles 120 zusammen mit dem Gelenkhals bis zu 90 ° abgewinkelt werden (siehe auch Fig. 4a für die Darstellung einer abgewinkelten Position).

Während die **Figur 2a** ein Verbindungselement 230 zusammen mit dem zweiten Gelenkteil 220 zeigt, zeigt die **Figur 2b** eine weitere perspektivische Ansicht, wobei die Gelenkschale zum Teil zur besseren Veranschaulichung aufgebrochen ist und das Verbindungselement 230 verkürzt dargestellt ist. In der Darstellung der **Figur 2b** wird die Gelenkschale bzw. das zweite Gelenkteil 220 mit einer vollständigen Aussparung 242 und einer teilweise weggebrochenen zweiten Aussparung 241 gezeigt, die den umlaufenden hohen Rand 244 auch nur zum Teil zeigt.

**Figur 2c** zeigt eine weitere Darstellung der Ausführungsform des zweiten Gelenkteiles 220, wobei zusätzlich ein Haltearm 301dargestellt ist, der mit dem distalen Ende des Verbindungselement 230 verbindbar ist. Der vordere sichtbare Teil des zweiten Gelenkteiles 220 zeigt, dass zwei Ausnehmungen 221 und 222 gegenüberliegend und symmetrisch zueinander angeordnet sind. Ferner kann man aus der **Figur 2c** und **Figur 2d** erkennen, dass eine zentrale Aussparung 229 am Fuße des zweiten Gelenkteiles 220 angeordnet ist.

**Figur 2d** zeigt zusätzlich eine Trennlinie t, die von der Aussparung 241 mittig also durch den Mittelpunkt durch die Ausnehmung 222 verläuft. Die zwei Ausnehmungen 222 und 221 in der Lagerschale sind so angeordnet, dass die jeweiligen Mittelpunkte der zwei kreisförmigen Taschen in der Gelenkschale gegenüberliegen. Die Mittelpunkte (M2 bei 221) liegen auf der Punkt-gestrichelten Linie, d. h. der senkrechten Achse m, wobei die Mittelpunktachse m quer zur abgehenden Längsachse b des zweiten Gelenkteiles 220 verläuft. Die Trennlinie t verläuft durch beide Mittelpunkte.

Diese Trennlinie t kennzeichnet, dass das zweite Gelenkteil 120 zweiteilig hergestellt wird. So kann bei der Montage zunächst der Teil (z. B. Unterteil genannt, wenn Orientierung wie in **Figur 2a**), der mit dem Verbindungselement 230 verbindbar ist, bereitgestellt werden. In dieses halboffene Gelenkschalensegment kann dann das erste Gelenkteil 120 eingeführt werden. In einem nächsten Schritt wird dann ein weiteres Teil (z. B. Oberteil genannt, wenn Orientierung wie in **Figur 2a**) der Gelenkschale 120 zum abschließenden Verschließen verwendet. Die halbsphärische Kugelsegmentpfanne des Oberteiles sollte so mit dem anderen Teil verbunden werden, dass keine Fugen oder Erhebungen entstehen, die die Lauffähigkeit der Wälzkörper stören könnten. Nach Abschluss der Montage (nicht gezeigt) wird ein sphärischer Lagerraum bereitgestellt, der teilweise Aussparungen aufweist, insbesondre umfassend die zentrale Aussparung 229 (siehe **Figur 2c** **und d**) und die Aussparungen 241 und 242 (siehe Figur 2a**, b und d**).

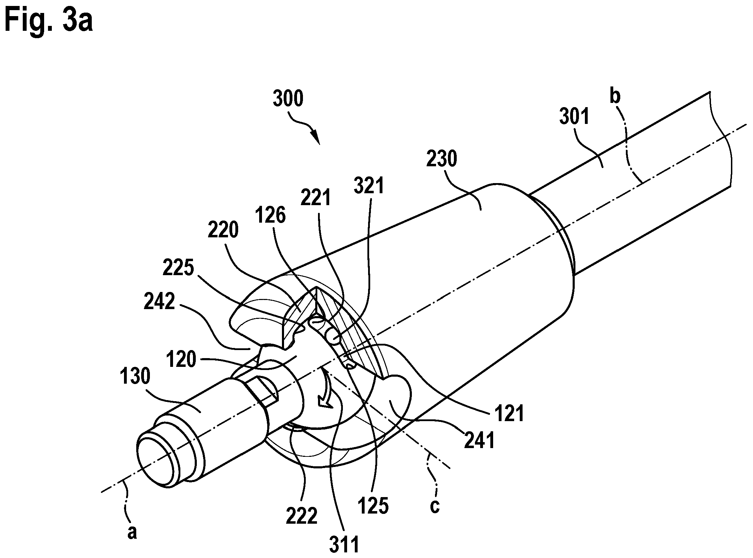

**Figur 3a** zeigt das gesamte Gelenk 300, das als Kugelgelenk ausgebildet ist und das erste Gelenkteil 120, das zweite Gelenkteil 220 mit einem Verbindungselement 230, einen Haltearm 301 und Wälzkörper 321 umfasst. Das als teilsphärische Gelenkschale ausgebildete Gelenkteil 220 ist teilweise aufgeschnitten, um das sich darin bewegende kugelsegmentförmige Kopfteil des ersten Gelenkteiles 120 besser sehen zu können. Zwischen dem ersten Gelenkteil 120 und dem zweiten Gelenkteil 220 und den korrespondierenden Ausnehmungen 121 und 221 ist ein Wälzkörper 321 angeordnet. Der weitere Wälzkörper befindet sich auf der gegenüberliegenden Seite des ersten Gelenkteiles 120 (nicht gezeigt).

Der Gelenkhals 130 an dem ersten Gelenkteil 120 hat die abgehende Achse a, die so orientiert ist, dass sie in Achse b fluchtet, die die abgehende Achse des zweiten Gelenkteiles 220 und gleichzeitig die Längsachse des daran angeschlossenen Halteelementes 301 ist. Daher wird die Achse b durch dieselbe punktgestrichelte Linie wie die Achse a gezeigt. Eine weitere punktgestrichelte Linie zeigt eine Achse c an, die 90 ° zu der Haltearmachse b verläuft.

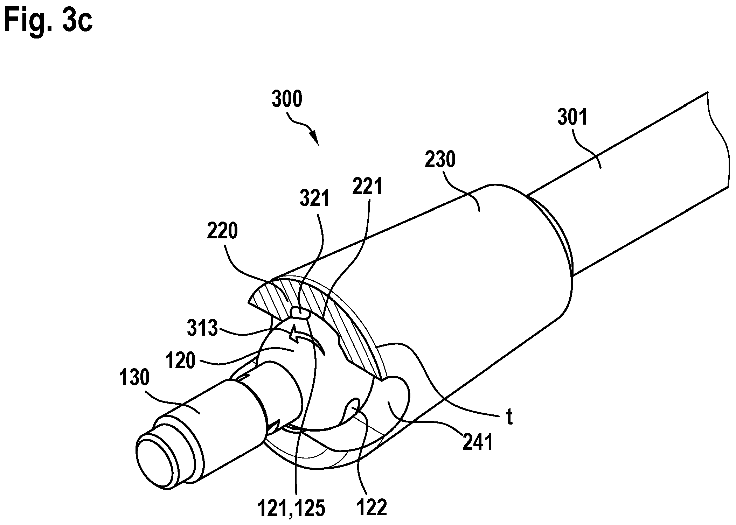

Der Pfeil 311 zeigt eine mögliche Drehbewegung um die Mittelachse a des Gelenkhalses nach rechts im Uhrzeigersinn an. Der Wälzkörper 321 bildet ein Zwischenelement oder sogenanntes schwimmendes Element zwischen dem zweiten Gelenkteil 220 und der korrespondierenden Ausnehmung 121 des ersten Gelenkteiles 120. In der gezeigten Darstellung ist der Wälzkörper 321 im Anschlag in der kreisförmigen Ausnehmung 221 der Gelenkschale bzw. des zweiten Gelenkteiles 220. Wie der Pfeil andeutet, kann das erste Gelenkteil 120 um seine Achse a noch weiter bis zu dem Anschlag 126 auf der linken Seite nach rechts gedreht werden. Alternativ, und hier nicht mit einem Pfeil angedeutet, könnte auch das erste Gelenkteil 120 gegen den Uhrzeigersinn um die Achse a gedreht werden, bis der Wälzkörper von dem Anschlag 125 begrenzt werden würde (hierzu siehe **Figur 3c**).

Mit Hilfe der Anschläge 125 und 126 bzw. dem als umlaufenden Rand ausgebildeten Anschlag 225 ist die Bewegung des ersten Gelenkteiles 120 zu dem zweiten Gelenkteil 220 mittels der in den Ausnehmungen bewegbaren Wälzkörpers 321 einschränkbar. Damit wird die freie Verschwenkbarkeit des Kugelgelenkes begrenzt. Verläuft ein Kabel entlang des Haltearms und wird mit dem Gelenkhals 130 des ersten Gelenkteiles 120 verbunden, wird damit verhindert, dass das Kabel sich unnötig verdrillt und um die Achse a oder Achse b gewickelt werden kann.

Ferner ermöglicht die Bereitstellung der Aussparungen 241 und 242, dass senkrecht zur Achse a der Gelenkhals 90 ° nach rechts oder links abgewinkelt werden kann. Die punktgestrichelte Linie bzw. Achse c zeigt z. B. die Konstellation an, wenn eine 90 ° Abwinkelung zu der Haltearmachse b durchgeführt wird, wie sie in Fig. 4a gezeigt wird.

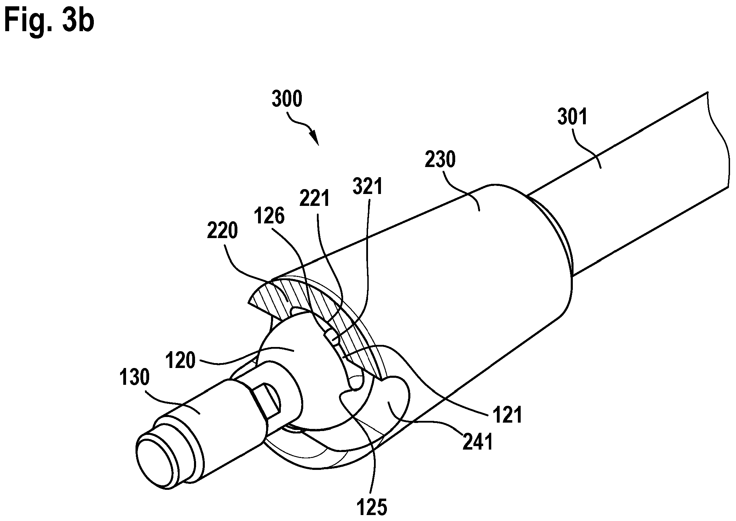

**Figur 3b** zeigt dieselbe Ausführungsform, wie in **Figur 3a** gezeigt, aber nachdem die Drehung im Uhrzeigersinn, der mit dem Pfeil 311 angezeigt worden ist, durchgeführt worden ist. In dieser Position ist nun der Wälzkörper 321 im Anschlag und zwar zwischen der Anschlagstelle 126 der ersten Ausnehmung 121 und dem Anschlag der Ausnehmung 221 des zweiten Gelenkteiles.

**Figur 3c** zeigt eine weitere Stellung des ersten Gelenkteiles 120 in dem zweiten Gelenkteil 220. Hier ist auf dem ersten Gelenkteil 120 nicht nur die erste Ausnehmung 121 zu sehen, sondern eine gegenüberliegende zweite Ausnehmung 122. Beide Ausnehmungen korrespondieren mit einer jeweiligen Ausnehmung 221, 222 der als Gelenkschale ausgebildeten zweiten Gelenkteiles 220. Der schematische Pfeil 313 zeigt die Drehrichtung an, wobei eine weitere Drehung im Uhrzeigersinn nicht mehr möglich ist, da sich der Wälzkörper 321 in der Anschlagstellung an den Anschlag 125 der rillenförmigen Ausnehmung 121 befindet. In anderen Worten das erste Gelenkteil 120 kann nicht mehr weiter im Uhrzeigersinn um die Achse a gedreht werden.

Die Ausnehmung 221 und die nicht gezeigte zweite Ausnehmung des zweiten Gelenkteiles 120 bzw. der Gelenkschale sind kreisförmig ausgebildet. Dabei verläuft der Mittelpunkt bzw. die Mittelachse m (hier nicht gezeigt) auf Höhe der Trennlinie t bzw. der Trennebene, die die Gelenkschale in ein Ober- und Unterteil teilt. Der hier gezeigte Teil der Gelenkschale bzw. des zweiten Gelenkteiles 220 bildet einen teilsphärischen Lagerraum mit Ausnehmungen 221, 222 und Aussparungen 241, 242 sowie Aussparung 229 (nicht gezeigt).

**Figur 4a** zeigt ein zweites Gelenkteil 220 mit einem Haltearm 301 in dem ein Schubelement 320 angeordnet ist. Das Schubelement kann entlang der Achse b verschoben werden. Dies ist mit dem Pfeil 310 angedeutet. Damit kann eine Verschiebung in Richtung der Kugelfläche und eine Arretierung des Kugelgelenkes erfolgen. Dabei wird das Schubelement 320 durch die zentrale Aussparung 229 (hier durch erstes Gelenkteil verdeckt) der Gelenkschale 220 entlang der Achse b soweit hindurchgeschoben, dass das Ende des Schubelementes 320 die Gelenkkugel berühren kann und eine Klemmkraft ausüben kann. Auf diese Weise kann bei einer Verschiebung des Schubelementes 320 in Richtung der Außenfläche des Kopfteiles des ersten Gelenkteiles 120 ein Reibschluss und somit eine Arretierung des gesamten Kugelgelenkes erfolgen.

Weiterhin zeigt die **Figur 4a** eine abgewinkelte Stellung des ersten Gelenkteiles 120 mit dem dazugehörigen Gelenkhals 130. Die Längsachse a des Gelenkhalses 130 ist in diesem Fall ungefähr 90° in Bezug zu der Haltearmachse b abgewinkelt, so dass sie mit der Achse c fluchtet. In anderen Worten, der Gelenkhals 131 kann von einer Position, in der seine abgehende Achse a parallel zu der Längsachse b des Verbindungselementes 230 verläuft, auf der Höhe der Aussparungen 241 bzw. 242 in eine Querposition bewegt werden, so dass er jeweils bis zu 90 ° in Bezug auf Achse b abgewinkelt ist. Dieses Abwinkeln ist dagegen nicht möglich in den Bereichen der Gelenkschale, in denen keine Erniedrigungen des Randes durch eine Aussparung 214, 242 vorgesehen sind.

In der gezeigten angewinkelten Stellung des ersten Gelenkteiles 120 sind zwei gegenüberliegende und rillenförmige Ausnehmungen 121 und 122 sichtbar, die zur Führung jeweils eines Wälzkörpers 321 dienen. Der in dieser Figur sichtbare Wälzkörper 321 ist zwischen dem Anschlag 126 der Ausnehmung 121 und dem umlaufenden Anschlag 225 der kreisförmigen Ausnehmung 221 geklemmt. Dadurch kann eine weitere Drehung im Uhrzeigersinn um die Achse a nicht mehr erfolgen und die Bewegung ist damit limitiert.

**Figur 4b** zeigt einen angewinkelten Gelenkhals 130, wobei die Gelenkhalsachse a wie in **Figur 4a** quer zu der Achse b des Schubelements 320 verläuft. Die **Figur 4b** zeigt im Gegensatz zur **Figur 4a** eine andere Anschlagposition in der kreisförmigen Ausnehmung 221 mit dem Durchmesse D1, nachdem das erste Gelenkteil 121 um die Achse a herum gegen den Uhrzeigersinn gedreht wurde. In der gezeigten Anschlagsposition wird der Wälzkörper 321 zwischen dem Anschlag 125 und dem Anschlag 225 der Ausnehmung 221 der Gelenkschale 220 eingeklemmt. Auf diese Weise wird die Bewegung in dem Uhrzeigersinn begrenzt. Auf diese Weise kann eine übermäßige Drehung in dieselbe Richtung verhindert werden.

Die Winkelrotation des kugelsegmentförmigen Kopfteiles um den Gelenkhalses 130, d. h. um die Achse a oder c in der gezeigten 90-°-Position, wird innerhalb eines vorbestimmten Winkels begrenzt, wobei eine weitere Drehung in Richtung Uhrzeigersinn zunächst entsprechend dem Winkel β möglich ist, der der Länge L2 des Durchmessers D1 der kreisförmigen Ausnehmung 221 entspricht. Während der Wälzkörper 321 bei einer weiteren Drehung im Uhrzeigersinn an dem haltearmseitigen Anschlag 225 der Ausnehmung 221 festgehalten wird, kann eine weitere Rotation gemäß dem Winkels α bzw. der Läuflänge L1 der rillenförmigen Ausnehmung 121 erfolgen. Dies bedeutet dass sich die Winkelbereiche α und β von der korrespondierenden Ausnehmungen 221 und 121 addieren.

Nicht zu sehen in dieser **Figur 4b** ist die zweite Ausnehmung 222, die gegenüberliegt und dieselbe Geometrie und Durchmesser D1 wie die Ausnehmung 221 besitzt. Hier ist ein weiterer zweiter Wälzkörper 321 vorgesehen, der aufgrund der symmetrischen Anordnung die gleiche Limitierung mit einem entsprechenden Anschlag wie der erste Wälzkörper 321 erfährt. Die Drehbewegungen bei der gezeigten 90 ° Abwinkelungsstellung können wie oben erläutert von der in **Figur 4b** gezeigten Anschlagsposition Stellung nur in Uhrzeigerrichtung gehen.

Ferner können sämtliche Drehbewegungen unterbunden werden, wenn das Schubelement 320 gemäß dem Pfeil 310 in Richtung Außenfläche des kugelsegmentförmigen Kopfteiles des ersten Gelenkteiles 120 zur Arretierung bewegt wird und damit eine Klemmkraft die Kontaktflächen der beiden Gelenkteile 120 und 220 gegeneinanderdrückt. In anderen Worten das gezeigte Gelenk 300 kann in zwei Betriebsweisen verwendet werden. Zum einem in einer arretierten Stellung und zum anderen in einer gelösten Stellung, wobei die Drehung des ersten Gelenkteiles 120 in dem zweiten Gelenkteil 220 um die vorbestimmten Winkel der entsprechenden Ausnehmungen 121 und 221 begrenzt ist. Auf diese Weise können übermäßige Belastungen auf jegliche Versorgungsleitungen verhindert werden.

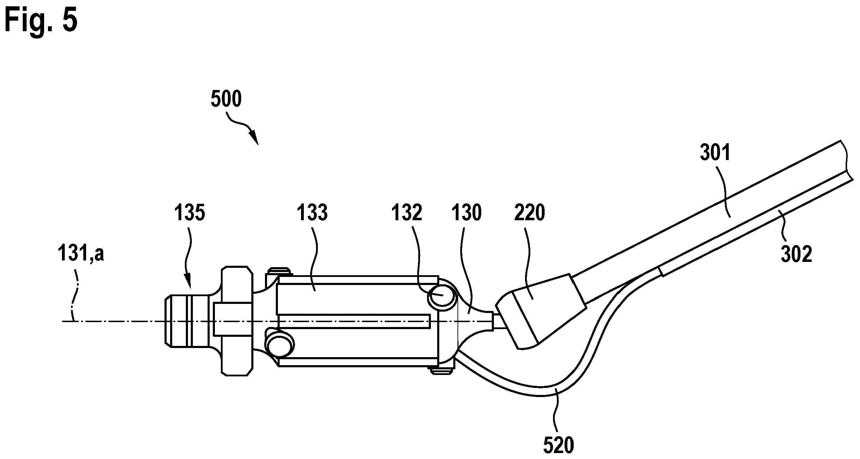

**Figur 5** zeigt den Teil eines Haltesystems 500 mit einer erfindungsgemäßen Vorrichtung zur Begrenzung der Beweglichkeit eines Drehgelenkes 300 mit einer beispielhaften Versorgungsleitung 520. Der Haltearm 301 ist nur zum Teil dargestellt und kann mit weiteren Haltesegmenten oder einer Basissäule verbunden werden. In dem Haltearm 301 kann ein Schubelement vorgesehen werden, das zur Klemmung oder Arretierung des ersten Gelenkteiles 120 in der Gelenkschale 220 ausgebildet ist.

Das erste Gelenkteil 120, in dieser Darstellung der **Figur 5** nicht zu sehen, und ist vorzugsweise als ein kugelsegmentförmiges Kopfteil ausgebildet. Der Gelenkhals 130 verbindet das erste Gelenkteil 120 mit einem distalen Handgriff 133 mit einer Griffachse 131, die mit der Gelenkhalsachse a fluchtet. Der distale Bereich des Haltesystems 500 ist der von dem proximalen Bereich, d. h. dem Haltearm 301, am weitesten entfernt gelegene Bereich. An der distalen Seite des Handgriffes 123 ist eine Kupplungsvorrichtung 135 vorgesehen. An der Kupplungsvorrichtung 135 kann beispielsweise ein medizinisches Instrument befestigt werden. Eine bevorzugte Ausführungsformen einer Kupplungseinheit 135 ist z. B. eine Schnellkupplungseinheit. Geeignete Schnellkupplungseinheiten sind autoklavierbar und ausgelegt diverse medizinische Instrumente anzuschließen. Beispiele für medizinische Instrumente sind Endoskope, Exoskope, Kameras aber auch Mikroscheren, Zangen, Pinzetten, Stanzen oder dergleichen. Viele der medizinischen Instrumente benötigen auch eine Versorgungsleitung 520 zur Stromversorgung und oder Steuerung von dem Haltearm 301, das zu dem Griff 123 führt.

Mit Hilfe von ein oder mehreren Knöpfen 132 kann ein an das Haltesystem 500 angeschlossener Endeffektor über die Versorgungsleitung 520 elektronisch aktiviert oder ausgeschaltet werden zu können. Zur Sicherheit des Patienten können die Betätigungselemente 132 eine Aktivierung der Arretierung nur durchführen, wenn alle Knöpfe 132 zugleich gedrückt werden. Somit kann eine zufällige Aktivierung von Komponenten des Haltesystems 500 ausgeschlossen werden.

Das Kabel 520 ist teilweise an den Haltesegmenten und / oder den Gelenkteilen mittels Fixiervorrichtungen 302 fixiert. Für die Fixierung am Haltesegment oder Haltearm 301 ist im gezeigten Beispiel ein Kabelschuh als Fixiervorrichtung 302 vorgesehen. Die Fixiervorrichtung 302 ist konfiguriert, die Versorgungsleitung 520 an dem Haltearm 301 an einer Position des Außenumfanges des Haltearmes 302 zu halten. Dabei kann eine Bewegung des Versorgungskabels in Richtung der Haltearmachse b unterbunden werden oder eine gewisse Bewegung des Kabels in Längsrichtung parallel zum Haltearm 302 ermöglicht werden, um ein Spiel des Kabels bei Abwinkelung des Gelenkes zu ermöglichen.

Mit Hilfe der Begrenzungsvorrichtung verdreht sich die Versorgungleitung 520 in Form eines Kabels und verhindert dass sich diese um den Haltearm 301 oder den Griff 123 wickelt. Aufgrund der Vorrichtung zur Begrenzung der Beweglichkeit des Drehgelenkes kann die Winkelrotation des Handgriffes 123 um seine Achse 131 bzw. der Gelenkhalsachse a in Bezug auf den Haltearm 301 auf innerhalb eines vorbestimmten Winkels begrenzt werden. Eine Drehung des Kugelgelenkes über 360 ° ist damit nicht mehr möglich. Durch die Begrenzung auf einen vorbestimmten Winkelbereich um die Gelenkhalsachse können Verwickelungen und somit Beschädigungen der Versorgungsleitung 520 nicht erfolgen. Insbesondere bei einer symmetrischen Anordnung von zwei Ausnehmungen 121, 122 bzw. 221, 222 auf jedem Gelenteil 120, 220 und zugehörigen Anschlägen und Wälzkörpern 321 wird die Stabilität und damit die Ergonomie des Haltesystems 500 verbessert, da dem Benutzer ein Gefühl von hoher Qualität und eines soliden Instruments vermittelt wird. Anders als in Figur 5 dargestellt, kann die Versorgungsleitung 520 auch teilweise im Inneren des Haltesegmentes 301 geführt werden. In der in **Figur 5** gezeigten Darstellung tritt die Versorgungsleitung in den Handgriff 123 ein.

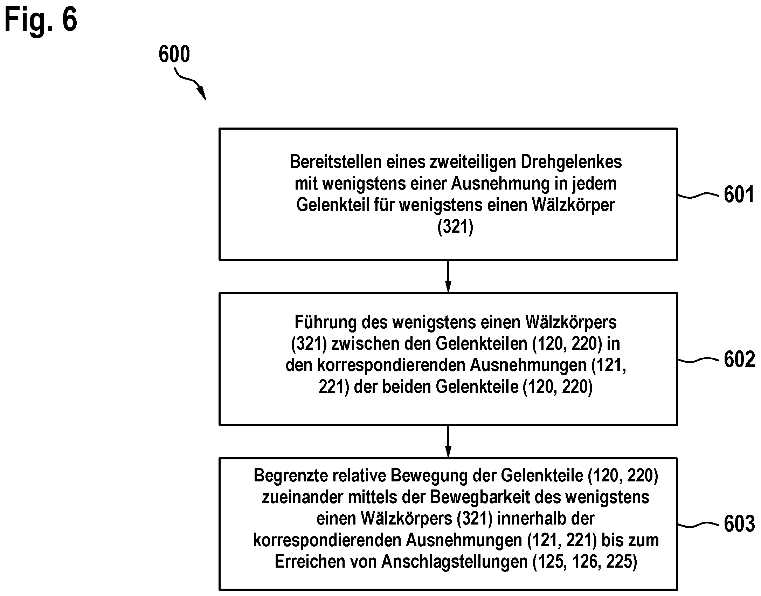

**Figur 6** zeigt ein Verfahren 600 gemäß der vorliegenden Erfindung. Als erster Verfahrensschritt 601 wird ein zweiteiliges Drehgelenk mit wenigstens einer Ausnehmung in jeden Gelenkteil für wenigstens einen Wälzkörper bereitgestellt. In dem zweiten Verfahrensschritt 602 erfolgt die Führung des wenigstens einen Wälzkörpers 321 zwischen den Gelenkteilen 120 und 220 in den korrespondierenden Ausnehmungen 121 und 221 der beiden Gelenkteile 120 und 220.

Schließlich wird in dem Verfahrensschritt 603 die relative Bewegung der Gelenkteile zueinander mittels der Bewegbarkeit des wenigstens einen Wälzkörpers innerhalb der korrespondierenden Ausnehmungen begrenzt. Dabei können sich die Gelenkteile 120, 220 zueinander in einem vorbestimmten begrenzten Winkelbereich bewegen, indem sich der wenigstens eine Wälzkörper innerhalb der korrespondierenden Ausnehmungen bis zum Erreichen der Anschlagstellungen 125, 126 und 225 bewegt. Dies sorgt dafür, dass eine Rotations- und damit eine Torsionskontrolle ausgeübt werden kann, um sicherzustellen, dass die Gelenkteile zueinander nicht über 360 ° drehen können. Somit kann das Risiko reduziert werden, dass eine Versorgungsleitung für einen Endeffektor, die z. B. in Form eines Kabels von dem ersten Gelenkteil zu dem zweiten Gelenkteil und mittels Fixiervorrichtungen fixiert oder geführt wird, durch ein Überdrehen der Gelenkteile zueinander beschädigt oder getrennt wird. Auf diese Weise kann jede Art von Versorgungsleitung, die u. a. als Datenleitungen, Steuerleitungen und / oder Leitungen von Fluiden bzw. Gasen verwendet werden kann, gegen zu große Beanspruchungen geschützt werden.

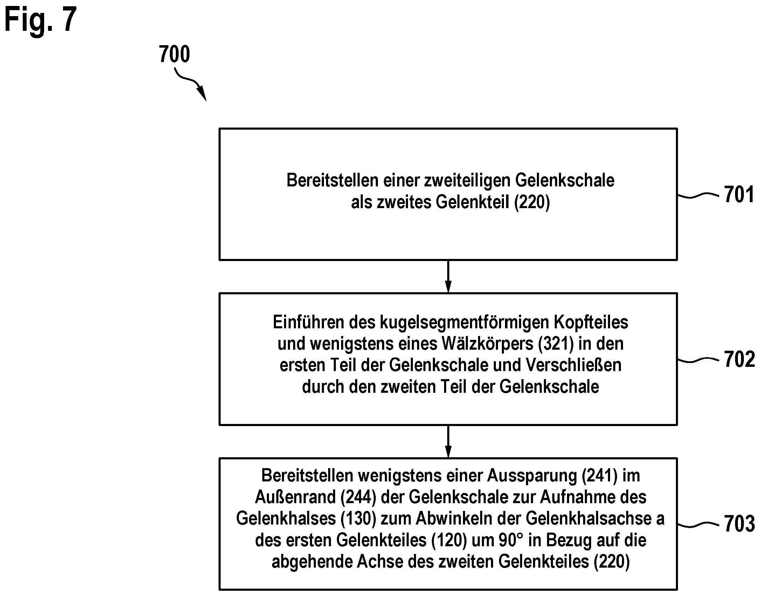

**Figur 7** zeigt ein Verfahren 700 gemäß der vorliegenden Erfindung. Dies umfasst als ersten Verfahrensschritt 701 das Bereitstellen einer zweiteiligen Gelenkschale als zweites Gelenkteil 220 mit vorzugsweise wenigstens zwei Laufflächen. Als nächster Verfahrensschritt 702 wird das als kugelsegmentförmige Kopfteil ausgebildete erste Gelenkteil 120 und wenigstens ein schwimmendes Element oder Wälzkörper 321 in einen ersten Teil (z. B. Unterteil) des als Gelenkschale ausgebildeten zweiten Gelenkteils 220 eingeführt. Daraufhin erfolgt das Verschließen durch einen zweiten Teil der Gelenkschale.

In einem optionalen Verfahrensschritt 703 können ein oder zwei Aussparungen 241, 241 im Außenrand der Gelenkschale des zweiten Gelenkteiles 220 bereitgestellt werden, um den Gelenkhals 130 des ersten Gelenkteiles 120 aufzunehmen und damit ein Abwinkeln desselben in Bezug auf die abgehende Achse b des zweiten Gelenkteiles 220 zu ermöglichen.

Schließlich können sich die Gelenkteile 120, 220 mittels der Bewegbarkeit der Wälzkörper innerhalb der korrespondierenden Ausnehmungen bis zum Erreichen der Anschlagstellungen in einem begrenzten Winkelberiech zueinander bewegt werden.

Ausführungsformen der Erfindung stellen eine Vorrichtung, System und Verfahren zur Begrenzung der Beweglichkeit eines Drehgelenkes vorzugweise für eine Haltevorrichtung für human- oder veterinärmedizinische Anwendungen bereit. Dabei umfasst die Vorrichtung zwei relativ zueinander um drei Achsen verdrehbare und verschwenkbare Gelenkteile und wenigstens einen ersten Wälzkörper zur Begrenzung der relativen Beweglichkeit der Gelenkteile; wobei beide Gelenkteile jeweils wenigstens eine erste Ausnehmung zur Führung des wenigstens einen ersten Wälzkörpers zwischen den Gelenkteilen und den jeweiligen Anschlägen der Ausnehmungen aufweist, um die Gelenkteile in einem durch die Anschläge begrenzten Winkelbereich zueinander zu bewegen.

Die in der Beschreibung und den Zeichnungen zu entnehmende Merkmale können einzeln für sich oder zu mehreren in beliebiger Kombination erfindungsgemäß angewandt werden, ohne den Rahmen der vorliegenden Offenbarung zu verlassen, so wie in den anhängigen Ansprüchen definiert.

### Bezugszeichenliste

- 100: erste Gelenkeinheit mit kugelsegmentförmigen Kopfteil und Gelenkhals
- 110: als kugelsegmentförmiges Kopfteil ausgebildetes erstes Gelenkteil
- 129: Außenfläche
- 121: als Führungsrille ausgebildete Ausnehmung
- 123: durch Anschläge 125, 126 begrenzter Winkelbereich
- 124: quer zur abgehenden Achse a verlaufender Kugeläquator
- 125, 126: Anschlag
- 127: gekrümmter Querschnitt; Krümmung
- 130: Gelenkhals
- 132: Knöpfe; Betätigungselemente
- 133: Handgriff
- 135: Kupplungsvorrichtung
- 200: zweite Gelenkeinheit mit zweiten Gelenkteil und Verbindungselement
- 220: zweites Gelenkteil
- 221: Ausnehmung in zweiten Gelenkteil 220
- 222: weitere Ausnehmung in zweiten Gelenkteil 220
- 225: umlaufender Anschlag
- 230: Verbindungselement
- 241, 242: Aussparung(en)
- 244: Außenrand der Gelenkschale
- 229: zentrale Aussparung
- 300: Gelenk
- 301: Haltesegment
- 310: Pfeil, der axialen Bewegung des Schubelementes 320 entlang der Längsachse b
- 311: Pfeil, der Drehbewegung im Uhrzeigersinn um Achse a anzeigt
- 313: Pfeil, der Drehbewegung gegen den Uhrzeigersinn um Achse a anzeigt
- 320: Schubelement
- 321: Wälzkörper
- 500: Haltesystem
- 520: Versorgungleitung
- 600: Verfahren
- 601: erster Verfahrensschritt
- 602: zweiter Verfahrensschritt
- 603: dritter Verfahrensschritt
- 700: Verfahren
- 701: Verfahrensschritt
- 702: weiterer Verfahrensschritt zur Montage
- 703: optionaler Verfahrensschritt

- a: Längsachse und Symmetrieachse des Gelenkhalses 130
- b: Achse des Verbindungselementes und Haltearmes
- c: Querachse zur Haltearmachse a
- m: Achse durch Mittelpunkte der kreisförmigen Ausnehmungen 221, 222
- r: Radius des kugelförmigen ersten Gelenkteiles 120
- t: Trennlinie zwischen Ober- und Unterteil des zweiten Gelenkteiles
- x: x-Achse
- D1: Außendurchmesser kreisförmige Ausnehmung 121
- D2: Außendurchmesser kreisförmige Ausnehmung 221
- L1: Lauflänge der Ausnehmung 121 entlang der gekrümmten Längsmittellinie
- L2: Lauflänge entlang der Richtung des Innendurchmessers der Ausnehmung 221
- M1: Kugelmittelpunkt des ersten Gelenkteiles 120p

## Patentansprüche

1. Vorrichtung zur Begrenzung der Beweglichkeit eines Drehgelenkes umfassend zwei relativ zueinander um drei Achsen verdrehbare und verschwenkbare Gelenkteile (120, 220); und
wenigstens einen ersten Wälzkörper (321) zur Begrenzung der relativen Beweglichkeit der Gelenkteile (120, 220);
wobei beide Gelenkteile (120, 220) jeweils wenigstens eine erste Ausnehmung (121, 221) zur Führung des wenigstens einen ersten Wälzkörpers (321) zwischen den Gelenkteilen (120, 220) und jeweiligen Anschlägen (125, 126, 225) der Ausnehmungen (121, 221) aufweist, um die Gelenkteile (120, 220) in einem durch die Anschläge (125, 126, 225) begrenzten Winkelbereich zueinander zu bewegen;
**dadurch gekennzeichnet, dass** sich
die Winkelbereiche (123) der korrespondierenden Ausnehmungen (121, 221) addieren.

2. Vorrichtung nach Anspruch 1, ferner umfassend
wenigstens einen zweiten Wälzkörper,
wobei beide Gelenkteile (120, 220) jeweils eine zweite Ausnehmung (122, 222) zur Führung des korrespondierenden zweiten Wälzkörpers aufweist, wobei vorzugsweise die erste und die zweite Ausnehmung (122, 222) an dem jeweiligen Gelenkteil (120, 220) gegenüberliegend angeordnet sind.

3. Vorrichtung nach Anspruch 2,
wobei das erste Gelenkteil durch Reibschluss an seiner Außenfläche arretierbar ist.

4. Vorrichtung nach einem der vorhergehenden Ansprüche,
wobei das erste Gelenkteil (120) als kugelsegmentförmiges Kopfteil ausgebildet ist und die wenigstens eine erste Ausnehmung (121) als längsförmige Außenrille mit zwei Anschlägen (125, 126) entlang des Kugeläquators (124) ausgebildet ist und einen Winkel von weniger als 70 ° umfasst, wobei die verbleibende hervorstehende Außenfläche (129) des ersten Gelenkteiles (120) für den Eingriff mit der Innenfläche des zweiten Gelenkteiles (220) verfügbar ist.

5. Vorrichtung nach einem der vorhergehenden Ansprüche,
wobei die wenigstens eine korrespondierende Ausnehmung (221) des zweiten Gelenkteiles (220) als kreisförmige Innenlauffläche mit einem umlaufenden Anschlagsrand (225) ausgebildet sind.

6. Vorrichtung nach einem der vorhergehenden Ansprüche,
wobei die korrespondierenden Ausnehmungen (121, 221) in Summe tiefer sind als der Außendurchmesser des korrespondierenden kugelförmigen Wälzkörpers (321).

7. Vorrichtung nach einem der vorhergehenden Ansprüche,
wobei das erste Gelenkteil (120) ein kugelsegmentförmiges Kopfteil mit Gelenkhals (130) ist; und
das zweite Gelenkteil (220) eine Gelenkschale ist, die zur Montage des Drehgelenkes zweiteilig ausgebildet ist, um das Kopfteil aufnehmen zu können,
wobei die Gelenkschale den Kugeläquator (124) in einer nicht abgewinkelten Stellung des Gelenkes im montierten Zustand übergreift.

8. Vorrichtung nach Anspruch 7,
wobei die Gelenkschale an Ihrem Außenrand wenigstens eine Aussparung (241) zur Aufnahme des Gelenkhalses (130) des ersten Gelenkteiles (120) aufweist, um die Achse des Gelenkhalses (131) bis zu 90 ° abwinkeln zu können.

9. Vorrichtung nach einem der vorhergehenden Ansprüche,
wobei das zweite Gelenkteil (220) über ein Verbindungselement (230) mit einem Haltesegment (301) verbindbar ist, in dem ein axial verschiebbares Schubelement (320) angeordnet ist; und
wobei das zweite Gelenkteil (220) eine zentrale Aussparung (229) aufweist, um das erste Gelenkteil (120) wahlweise mittels einer Verschiebung des Schubelementes (320) zu arretieren oder zu lösen.

10. System umfassend,
eine Haltevorrichtung umfassend wenigstens ein distales Haltesegment oder einen distalen Handgriff (133) und ein proximales Haltesegment (301) für eine medizinische Vorrichtung, die jeweils mit einem Drehgelenk koppelbar sind, wobei das Drehgelenk eine Vorrichtung zur Begrenzung seiner Beweglichkeit nach einem der vorhergehenden Ansprüche aufweist; und eine Versorgungsleitung (520) für die medizinische Vorrichtung, die von dem ersten Gelenkteil (120) zum zweiten Gelenkteil (220) mittels Fixiervorrichtungen geführt wird, wobei eine Begrenzung der Beweglichkeit des ersten Gelenkteiles (120) gegenüber dem zweiten Gelenkteil (220) eine Beschädigung der Versorgungsleitung (520) durch Umwickeln und / oder Zuglasten verhindert.

11. System nach Anspruch 10,
wobei das Drehgelenk ein Kugelgelenk ist und die Gelenkschale mit dem proximalen Haltesegment (301) verbunden ist; und
das proximale Haltesegment (301) ein mittels einem Betätigungselementes axial verschiebbares Schubelement (320) aufweist, um das Kopfteil (120) des ersten Gelenkteiles (120) wahlweise reibschlüssig zu arretieren oder zu lösen.

12. Verfahren zur Begrenzung der Beweglichkeit eines Drehgelenkes nach einem der vorhergehenden Ansprüche 1-9 umfassend die
folgenden Schritte:
- Bereitstellen (601) eines zweiteiligen Drehgelenkes mit wenigstens einer Ausnehmung in jedem Gelenkteil für wenigstens einen Wälzkörper (321);
- Führung (602) des wenigstens einen Wälzkörpers (321) zwischen den Gelenkteilen in den korrespondierenden Ausnehmungen der beiden Gelenkteile (120, 220);
- Begrenztes (603) Bewegen der Gelenkteile (120, 220) zueinander in einem begrenzten Winkelbereich aufgrund der Bewegbarkeit des wenigstens einen Wälzkörpers (321) innerhalb der korrespondierenden Ausnehmungen bis zum Erreichen der jeweiligen Anschläge (125, 126, 225), wobei sich die Winkelbereiche (123) der korrespondierenden Ausnehmungen (121,221) addieren und und
- Bereitstellen einer Aussparung (241) oder zwei Aussparungen (241, 242) im Außenrand (244) der Gelenkschale (220) zur Aufnahme des Gelenkhals (130), und Abwinkeln der Achse des Gelenkhalses (131) des ersten Gelenkteiles (120) bis zu 90 °.

13. Verfahren nach Anspruch 12; ferner umfassend die folgenden Verfahrensschritte, Verbinden des zweiten Gelenkteiles (220) über ein Verbindungselement (230) mit einem Haltesegment (301), in dem ein axial verschiebbares Schubelement (320) angeordnet ist; und
wahlweise Arretieren oder Lösen des ersten Gelenkteiles,
wobei zur Arretierung mittels Reibschluss eine axiale Verschiebung des Schubelementes (320) in dem Haltesegment durch eine zentrale Aussparung hindurch in Richtung der Außenfläche des ersten Gelenkteiles erfolgt; und
wobei zum Lösen eine axiale Verschiebung des Schubelementes (320) von der Außenfläche des ersten Gelenkteiles (120) weg erfolgt.

14. Verfahren nach Anspruch 13; ferner umfassend die folgenden Verfahrensschritte:
Fixieren einer Versorgungsleitung (520) an dem ersten Gelenkteil (120) und an dem zweiten Gelenkteil (220) und / oder einem weiteren Haltesegment (301) mittels Fixiervorrichtungen;
wobei eine Begrenzung der Beweglichkeit des ersten Gelenkteiles (120) gegenüber dem zweiten Gelenkteil (220) eine Beschädigung der Versorgungsleitung (520) durch Umwickeln und / oder Zuglasten verhindert.

15. Verfahren nach Anspruch 12 oder 13,
wobei vor der Bereitstellung des zweiteiligen Drehgelenkes, das als Kugelgelenk ausgebildet ist und ein kugelsegmentförmiges Kopfteil als erstes Gelenkteil (120) und eine zur Montage teilbare Gelenkschale (220) als zweites Gelenkteil (220) umfasst, folgende Verfahrensschritte erfolgen:
Einführen des ersten Gelenkteiles (120) mit dem wenigstens einem Wälzkörper (321) in ein Unterteil der Gelenkschale, wobei der Gelenkhals (130) des kugelsegmentförmigen Gelenkteiles (120) aus der Gelenkschale geführt wird; und
Umschließen des kugelsegmentförmigen Gelenkteiles (120) mit einem Oberteil der Gelenkschale.

## Claims

1. A device for limiting the mobility of a rotary joint comprising two joint parts (120, 220) which can be rotated and pivoted relative to one another about three axes; and
at least one first roller body (321) for limiting the relative mobility of the joint parts (120, 220);
wherein both joint parts (120, 220) each have at least one first recess (121, 221) for guiding the at least one first roller body (321) between the joint parts (120, 220) and respective stops (125, 126, 225) of the recesses (121, 221) in order to move the joint parts (120, 220) relative to one another in an angular range limited by the stops (125, 126, 225);
**characterised in that** the angular ranges (123) of the corresponding recesses (121, 221) are summed.

2. The device according to claim 1, further comprising at least one second roller body, wherein both joint parts (120, 220) each have a second recess (122, 222) for guiding the corresponding second roller body, wherein the first and second recesses (122, 222) are preferably arranged opposite one another on the respective joint part (120, 220).

3. The device according to claim 2, wherein the first joint part can be locked by frictional engagement on its outer surface.

4. The device according to one of the preceding claims, wherein the first joint part (120) is in the form of a spherical-segment-shaped head part and the at least one first recess (121) is in the form of an elongate outer groove with two stops (125, 126) along the spherical equator (124) and comprises an angle of less than 70°, wherein the remaining protruding outer surface (129) of the first joint part (120) is available for engagement with the inner surface of the second joint part (220).

5. The device according to one of the preceding claims, wherein the at least one corresponding recess (221) of the second joint part (220) is in the form of a circular inner running surface with a circumferential stop edge (225).

6. The device according to one of the preceding claims, wherein the corresponding recesses (121, 221) are deeper in total than the outer diameter of the corresponding spherical roller body (321).

7. The device according to one of the preceding claims, wherein the first joint part (120) is a spherical-segment-shaped head part with a joint neck (130); and the second joint part (220) is a joint shell which is formed in two parts for assembling the rotary joint in order to be able to receive the head part, wherein the joint shell engages over the spherical equator (124) in a non-angled position of the joint in the assembled state.

8. The device according to claim 7, wherein the joint shell has at least one recess (241) on its outer edge for receiving the joint neck (130) of the first joint part (120) in order to be able to angle the axis of the joint neck (131) by up to 90 °.

9. The device according to one of the preceding claims, wherein the second joint part (220) can be connected via a connecting element (230) to a holding segment (301) in which an axially displaceable thrust element (320) is arranged; and wherein the second joint part (220) has a central recess (229) for selectively locking or releasing the first joint part (120) by means of a displacement of the thrust element (320).

10. A system comprising, a holding device comprising at least one distal holding segment or a distal handle (133) and a proximal holding segment (301) for a medical device, each of which can be coupled to a rotary joint, wherein the rotary joint has a device for limiting its mobility according to one of the preceding claims; and a supply line (520) for the medical device, which is guided from the first joint part (120) to the second joint part (220) by means of fixing devices, wherein a limitation of the mobility of the first joint part (120) relative to the second joint part (220) prevents damage to the supply line (520) due to wrapping and/or tensile loads.

11. The system according to claim 10, wherein the rotary joint is a ball joint and the joint shell is connected to the proximal holding segment (301); and the proximal holding segment (301) has a thrust element (320) which can be axially displaced by means of an actuating element in order to selectively lock or release the head part (120) of the first joint part (120) in a friction-locking manner.

12. A method for limiting the mobility of a rotary joint according to one of the preceding claims 1-9, comprising the following steps:
- Providing (601) a two-part rotary joint with at least one recess in each joint part for at least one roller body (321);
- Guiding (602) the at least one roller body (321) between the joint parts in the corresponding recesses of the two joint parts (120, 220);
- Limiting (603) movement of the joint parts (120, 220) relative to one another in a limited angular range due to the mobility of the at least one roller body (321) within the corresponding recesses until the respective stops (125, 126, 225) are reached, wherein the angular ranges (123) of the corresponding recesses (121, 221) are summed, and
- Providing a recess (241) or two recesses (241, 242) in the outer edge (244) of the joint shell (220) for receiving the joint neck (130), and angling the axis of the joint neck (131) of the first joint part (120) by up to 90 °.

13. The method according to claim 12; further comprising the following method steps, connecting the second joint part (220) via a connecting element (230) to a holding segment (301) in which an axially displaceable thrust element (320) is arranged; and Selectively locking or releasing the first joint part, wherein an axial displacement of the thrust element (320) in the holding segment takes place through a central recess in the direction of the outer surface of the first joint part for locking by means of frictional engagement; and wherein an axial displacement of the thrust element (320) away from the outer surface of the first joint part (120) takes place for release.

14. The method according to claim 13; further comprising the following method steps: Fixing a supply line (520) to the first joint part (120) and to the second joint part (220) and/or a further holding segment (301) by means of fixing devices; wherein a limitation of the mobility of the first joint part (120) relative to the second joint part (220) prevents damage to the supply line (520) due to wrapping and/or tensile loads.

15. The method according to claim 12 or 13, wherein the following method steps are carried out before providing the two-part rotary joint, which is in the form of a ball joint and comprises a spherical-segment-shaped head part as the first joint part (120) and a joint shell (220), which can be divided for assembly, as the second joint part (220): Inserting the first joint part (120) with the at least one roller body (321) into a lower part of the joint shell, wherein the joint neck (130) of the spherical-segment-shaped joint part (120) is guided out of the joint shell; and enclosing the spherical-segment-shaped joint part (120) with an upper part of the joint shell.

## Revendications

1. Dispositif permettant de limiter la mobilité d'une articulation rotative comprenant deux parties d'articulation (120, 220) pouvant entrer en rotation et pivoter l'une par rapport à l'autre autour de trois axes ;
et au moins un premier corps roulant (321) permettant de limiter la mobilité relative des parties d'articulation (120, 220) ;
dans lequel les deux parties d'articulation (120, 220) présentent respectivement au moins un premier évidement (121, 221) permettant de guider l'au moins un premier corps roulant (321) entre les parties d'articulation (120, 220) et des butées (125, 126, 225) respectives des évidements (121, 221) afin de déplacer les parties d'articulation (120, 220) l'une par rapport à l'autre dans une plage angulaire délimitée par les butées (125, 126, 225) ;
**caractérisé en ce que** les plages angulaires (123) des évidements (121, 221) correspondants s'additionnent.

2. Dispositif selon la revendication 1, comprenant en outre au moins un second corps roulant, dans lequel les deux parties d'articulation (120, 220) présentent respectivement un second évidement (122, 222) permettant guider le second corps roulant correspondant, dans lequel de préférence le premier et le second évidement (122, 222) sont agencés en face l'un de l'autre sur la partie d'articulation (120, 220) respective.

3. Dispositif selon la revendication 2, dans lequel la première partie d'articulation peut être bloquée par friction sur sa surface externe.

4. Dispositif selon l'une des revendications précédentes, dans lequel la première partie d'articulation (120) est conçue comme une partie de tête en forme de segment de rotule et l'au moins un premier évidement (121) est conçu comme une rainure externe longitudinale comportant deux butées (125, 126) le long de l'équateur de la rotule (124) et comprend un angle inférieur à 70 °, dans lequel la surface externe (129) saillante restante de la première partie d'articulation (120) est disponible pour venir en prise avec la surface interne de la seconde partie d'articulation (220).

5. Dispositif selon l'une des revendications précédentes, dans lequel l'au moins un évidement (221) correspondant de la seconde partie d'articulation (220) est conçu comme une surface de roulement interne de forme circulaire comportant un bord de butée périphérique (225).

6. Dispositif selon l'une des revendications précédentes, dans lequel les évidements (121, 221) correspondants sont plus profonds au total que le diamètre externe du corps roulant (321) en forme de rotule correspondant.

7. Dispositif selon l'une des revendications précédentes, dans lequel la première partie d'articulation (120) est une partie de tête en forme de segment de rotule comportant un col d'articulation (130) ; et la seconde partie d'articulation (220) est une coque d'articulation, qui est conçue en deux parties pour le montage de l'articulation rotative, afin de pouvoir recevoir la partie de tête, dans lequel la coque d'articulation chevauche l'équateur de la rotule (124) dans une position non coudée de l'articulation à l'état monté.

8. Dispositif selon la revendication 7, dans lequel la coque d'articulation présente sur son bord externe au moins un évidement (241) permettant de recevoir le col d'articulation (130) de la première partie d'articulation (120), afin de pouvoir couder l'axe du col d'articulation (131) jusqu'à 90 °.

9. Dispositif selon l'une des revendications précédentes, dans lequel la seconde partie d'articulation (220) peut être reliée par l'intermédiaire d'un élément de liaison (230) à un segment de maintien (301) dans lequel est agencé un élément de poussée (320) pouvant être déplacé axialement ; et dans lequel la seconde partie d'articulation (220) présente un évidement central (229) afin de bloquer ou débloquer sélectivement la première partie d'articulation (120) par le biais d'un déplacement de l'élément de poussée (320).

10. Système comprenant, un dispositif de maintien comprenant au moins un segment de maintien distal ou une poignée distale (133) et un segment de maintien proximal (301) pour un dispositif médical, qui peuvent respectivement être couplés à une articulation rotative, dans lequel l'articulation rotative présente un dispositif permettant de limiter sa mobilité selon l'une des revendications précédentes ; et une ligne d'alimentation (520) pour le dispositif médical, qui est guidée de la première partie d'articulation (120) à la seconde partie d'articulation (220) par le biais de dispositifs de fixation, dans lequel une limitation de la mobilité de la première partie d'articulation (120) par rapport à la seconde partie d'articulation (220) empêche un endommagement de la ligne d'alimentation (520) par un enroulement et/ou des charges de traction.

11. Système selon la revendication 10, dans lequel l'articulation rotative est une articulation à rotule et la coque d'articulation est reliée au segment de maintien proximal (301) ; et le segment de maintien proximal (301) présente un élément de poussée (320) pouvant être déplacé axialement par le biais d'un élément d'actionnement, afin de bloquer ou de débloquer sélectivement par friction la partie de tête (120) de la première partie d'articulation (120).

12. Procédé permettant de limiter la mobilité d'une articulation rotative selon l'une des revendications précédentes 1 à 9, comprenant les étapes suivantes :
- fourniture (601) d'une articulation rotative en deux parties comportant au moins un évidement dans chaque partie d'articulation pour au moins un corps roulant (321) ;
- guidage (602) d'au moins un corps roulant (321) entre les parties d'articulation dans les évidements correspondants des deux parties d'articulation (120, 220) ;
- déplacement limité (603) des parties d'articulation (120, 220) l'une par rapport à l'autre dans une plage angulaire limitée en raison de la mobilité d'au moins un corps roulant (321) à l'intérieur des évidements correspondants jusqu'à atteindre les butées (125, 126, 225) respectives, dans lequel les plages angulaires (123) des évidements (121, 221) correspondants s'additionnant, et
- fourniture d'un renfoncement (241) ou deux renfoncements (241, 242) dans le bord externe (244) de la coque d'articulation (220) permettant de recevoir le col d'articulation (130), et formation d'un coude de l'axe du col d'articulation (131) de la première partie d'articulation (120) jusqu'à 90 °.

13. Procédé selon la revendication 12 ; comprenant en outre les étapes de procédé suivantes, liaison de la seconde partie d'articulation (220) par l'intermédiaire d'un élément de liaison (230) à un segment de maintien (301) dans lequel est agencé un élément de poussée (320) pouvant être déplacé axialement ; et sélectivement bloquer ou débloquer la première partie d'articulation, dans lequel, pour le blocage par le biais de friction, un déplacement axial de l'élément de poussée (320) dans le segment de maintien est effectué à travers un renfoncement central en direction de la surface externe de la première partie d'articulation ; et dans lequel, pour le déblocage, un déplacement axial de l'élément de poussée (320) est effectué en s'éloignant de la surface externe de la première partie d'articulation (120).

14. Procédé selon la revendication 13 ; comprenant en outre les étapes de procédé suivantes : fixation d'une ligne d'alimentation (520) à la première partie d'articulation (120) et à la seconde partie d'articulation (220) et/ou à un autre segment de maintien (301) par le biais de dispositifs de fixation ; dans lequel une limitation de la mobilité de la première partie d'articulation (120) par rapport à la seconde partie d'articulation (220) empêche un endommagement de la ligne d'alimentation (520) par enroulement et/ou charge de traction.

15. Procédé selon la revendication 12 ou 13, dans lequel, avant la fourniture de l'articulation rotative en deux parties, qui est conçue comme une articulation à rotule et comprend une partie de tête en forme de segment de rotule comme première partie d'articulation (120) et une coque d'articulation (220) divisible pour le montage comme seconde partie d'articulation (220), les étapes de procédé suivantes sont effectuées : introduction de la première partie d'articulation (120) comportant l'au moins un corps roulant (321) dans une partie inférieure de la coque d'articulation, dans lequel le col d'articulation (130) de la partie d'articulation (120) en forme de segment de rotule est guidé hors de la coque d'articulation ; et enfermement de la partie d'articulation (120) en forme de segment de rotule avec une partie supérieure de la coque d'articulation.
